(19) Europäisches Patentamt / European Patent Office / Office européen des brevets

(11) **EP 2 930 209 B2**

(12) # NEW EUROPEAN PATENT SPECIFICATION
After opposition procedure

(45) Date of publication and mention
of the opposition decision:
**13.07.2022 Bulletin 2022/28**

(45) Mention of the grant of the patent:
**31.01.2018 Bulletin 2018/05**

(21) Application number: **13861275.9**

(22) Date of filing: **04.12.2013**

(51) International Patent Classification (IPC):
**C08L 23/16** (2006.01)   **C08J 5/04** (2006.01)
**C08K 7/04** (2006.01)   **C08L 23/10** (2006.01)
**C08L 53/00** (2006.01)   **B29B 11/16** (2006.01)
**B29C 45/00** (2006.01)

(52) Cooperative Patent Classification (CPC):
(C-Sets available)
**C08K 7/14; B29C 45/0001; B29C 45/0005;
C08F 297/083; C08J 5/042; C08J 5/043;
C08K 7/06; C08L 23/06; C08L 23/08; C08L 23/10;
C08L 23/14; C08L 23/16; C08L 53/00;**
B29K 2105/12; B29K 2223/14;     (Cont.)

(86) International application number:
**PCT/JP2013/082598**

(87) International publication number:
**WO 2014/088035 (12.06.2014 Gazette 2014/24)**

(54) **FIBER-REINFORCED POLYPROPYLENE RESIN COMPOSITION AND MOLDED ARTICLE OF SAME**

FASERVERSTÄRKTE POLYPROPYLENHARZZUSAMMENSETZUNG UND FORMARTIKEL DARAUS

COMPOSITION DE RÉSINE À BASE DE POLYPROPYLÈNE RENFORCÉE PAR DES FIBRES, ET CORPS MOULÉ DE CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.12.2012 JP 2012268514**

(43) Date of publication of application:
**14.10.2015 Bulletin 2015/42**

(73) Proprietor: **Japan Polypropylene Corporation
Tokyo 100-8251 (JP)**

(72) Inventors:
• **AOKI Naoya**
**Yokkaichi-shi**
**Mie 510-0848 (JP)**
• **KONDO Kazumasa**
**Yokkaichi-shi**
**Mie 510-0848 (JP)**
• **MASUDA Kenji**
**Yokkaichi-shi**
**Mie 510-0848 (JP)**
• **SHIMOUSE Masashi**
**Yokkaichi-shi**
**Mie 510-0848 (JP)**

(74) Representative: **Müller-Boré & Partner
Patentanwälte PartG mbB
Friedenheimer Brücke 21
80639 München (DE)**

(56) References cited:
EP-A1- 1 364 760      EP-A1- 2 573 134
WO-A1-02/074855      WO-A1-2013/035764
WO-A1-2013/035764    WO-A1-2014/033017
JP-A- H03 200 853     JP-A- 2002 003 691
JP-A- 2004 300 293    JP-A- 2005 220 173
JP-A- 2007 137 963    JP-A- 2009 035 713
JP-A- 2009 155 522    JP-A- 2009 155 522
JP-A- 2009 280 781    JP-A- 2012 087 263
JP-A- 2012 087 263    JP-A- 2014 028 884

EP 2 930 209 B2

(52) Cooperative Patent Classification (CPC): (Cont.)
C08J 2323/14; C08J 2323/16; C08L 2205/02;
C08L 2205/03; C08L 2207/04

C-Sets
**C08K 7/06, C08L 23/16;**
**C08K 7/14, C08L 23/16;**
**C08L 23/14, C08K 7/14, C08L 53/00, C08L 23/16,**
**C08L 23/06;**
**C08L 23/16, C08K 7/14, C08L 23/08, C08L 23/10,**
**C08L 23/16, C08L 53/00**

**Description**

The present invention relates to a fiber-reinforced polypropylene resin composition and a molded article prepared therefrom. In more specific, the present invention relates to a fiber-reinforced polypropylene resin composition, and a molded article prepared therefrom having good grain transfer characteristics, a soft surface texture, reduced weld lines, high rigidity, and high heat resistance.

Polypropylene resin compositions are used in a variety of fields, because of their excellent characteristics, including physical properties, moldability, recyclability, and economic advantages. Specifically, because of their high moldability, well-balanced physical properties, good recyclability, and economic advantages, polypropylene resins and polypropylene resin compositions, such as composite polypropylene resins prepared by reinforcing polypropylene resins with a filler (e.g., glass fiber or talc) or an elastomer (rubber), are widely used in various fields, particularly in automobile parts, such as instrument panels and pillars, and parts for electrical products, such as television sets and vacuum cleaners. Molded articles prepared from these compositions are also used in various fields.

In these fields, molded articles prepared from polypropylene resin compositions are increasingly required to have high functionality and large size, and to be applied in versatile and complicated applications. In particular, the molded particles are required to achieve high quality of, for example, automobile interior parts. Thus, such a polypropylene resin composition is demanded to be improved in moldability, balance of physical properties, and grain transfer characteristics which greatly affect the texture of a molded article prepared from the composition. The molded article is also demanded to have improved appearance (reduction of weld lines or flow marks) and improved surface texture.

A typical technique for improving the rigidity (strength) of a polypropylene resin composition or a molded article prepared therefrom involves incorporation of a filler, such as glass fiber or talc, into the resin composition or the molded article. For example, PTL 1 discloses a thermoplastic polyolefin resin composition having high rigidity and a mechanical strength as high as that of a polyamide resin reinforced with glass fiber, the polyolefin resin composition containing (A) a polypropylene resin mixture mainly containing polypropylene prepared by two or more steps of sequential polymerization, the mixture containing a propylene-ethylene copolymer rubber having a mean dispersed particle size of 2 $\mu$m or less; (B) a polyolefin resin; and (C) a filler having a mean diameter of 0.01 to 1,000 $\mu$m and a mean aspect ratio (length/diameter) of 5 to 2,500, wherein the amount of the filler is 0.1 to 200 parts by weight relative to 100 parts by weight of the total amount of the components (A) and (B). Although PTL 1 states that a molded article prepared from the composition exhibits high tensile strength, high bending strength, high Izod impact strength, high falling weight impact strength, and high flexural modulus, PTL 1 mentions neither the grain transfer characteristics which affect the texture of the molded article, nor the surface hardness (softness) of the molded article, for example. Thus, the levels of these properties are not known.

A very important factor in the application of a molded article prepared from a polypropylene resin composition to, for example, automobile interior parts is the surface quality of the molded article, which is to be disposed close to user's eyes or touched directly by user's hands. Enhancement of the surface quality can improve the texture of the molded article, thereby providing a luxurious appearance. In many cases, the surface of the molded article is subjected to graining treatment for providing the article with a matte appearance. An important factor for this treatment is the "grain transfer characteristics" of the molded article.

In relation to grain transfer characteristics, PTL 2 discloses an automobile interior part having specific scratch resistance and hardness, the automobile interior part being produced by thermomolding of a propylene-ethylene block copolymer composition containing 20 to 90 wt% propylene-ethylene block copolymer satisfying specific requirements, and 10 to 80 wt% thermoplastic olefin elastomer or a thermoplastic styrene elastomer. Although PTL 2 states that the molded automobile interior part has flexibility and excellent grain transfer characteristics, texture, and scratch resistance, PTL 2 does not mention the rigidity of the molded article. Thus, the level of the rigidity is not known. However, the molded article probably exhibits a relatively low flexural modulus, because the molded article, which contains no fillers, exhibits flexibility as described above.

Injection molding is often used for producing automobile parts from a polypropylene resin composition from the viewpoint of productivity. Unfortunately, injection molding may provide automobile parts with a poor appearance, such as weld lines or flow marks. Such a poor appearance is optionally concealed by, for example, a coating procedure, which may require a cumbersome process for producing automobile parts, resulting in cost increase. PTL 3 discloses a material which can provide a molded article having an excellent appearance; specifically, a propylene resin composition containing (A) 40 to 99 parts by weight of a propylene block copolymer prepared with a specific catalyst, (B) 0 to 35 parts by weight of an elastomer, and (E) 1 to 40 parts by weight of a filler. Although PTL 3 states that the composition exhibits high fluidity during injection molding, and a molded article prepared from the composition has good appearance and good balance between rigidity and impact resistance, PTL 3 does not mention the grain transfer characteristics or texture of the molded article. Thus, the levels of these properties are not known.

PTL 4 discloses a propylene copolymer composition containing (A) 20 to 70 wt% propylene-$\alpha$-olefin random copolymer having a Q value of 2 to 5 and an isotactic triad fraction of 96% or more, and (B) 30 to 80 wt% propylene-$\alpha$-

olefin block copolymer. Although PTL 4 states that the composition can provide a molded article having excellent weld appearance, and the molded article exhibits good surface quality even when produced at low injection pressure, PTL 4 does not mention the grain transfer characteristics of the molded article. Thus, the level of the grain transfer characteristics is not known. However, the molded article probably has poor grain transfer characteristics, because the propylene-$\alpha$-olefin block copolymer, which contains a crystalline polypropylene component, is contained in an amount of 30 wt% or more, and thus cooling solidification of the melted resin may proceed at relatively high temperatures during a molding process.

An increasing demand has arisen for improvement of the texture of a molded article, including improvement of softness (flexibility) and reduction of stickiness. Thus, an improved material for producing such a molded article has been proposed.

For example, PTL 5 discloses a material having fluidity, foamability, and flexibility; specifically, a thermoplastic elastomer composition for injection foam molding prepared by mixing 100 parts by weight of a thermoplastic elastomer (II) with 10 to 100 parts by weight of an ethylene-$\alpha$-olefin copolymer (G) and 1 to 50 parts by weight of a styrene thermoplastic elastomer (H), wherein the thermoplastic elastomer (II) is prepared through addition of 1 to 20 parts by weight of a specific polypropylene resin (D), 1 to 20 parts by weight of a specific propylene-$\alpha$-olefin copolymer rubber (E), and 1 to 30 parts by weight of a softener (F) to 100 parts by weight of an olefin thermoplastic elastomer (I), the olefin thermoplastic elastomer (I) being prepared by dynamic heat treatment, in the presence of a cross-linking agent, of a mixture containing 10 to 60 parts by weight of a specific polypropylene resin (A), 40 to 90 parts by weight of an ethylene copolymer rubber (B), and 0 to 50 parts by weight of a softener (C) (the total amount of the components (A), (B), and (C) is 100 parts by weight). PTL 5 states that the composition has high fluidity, and a foam-molded article prepared from the composition has a value of flexibility (JIS-A hardness) from which a soft texture is inferred. Unfortunately, production of the molded article requires foam molding, which may result in cost increase. PTL 5 does not specifically mention, for example, the rigidity of the molded article, and thus the level thereof is not known.

PTL 6 discloses a thermoplastic elastomer composition which provides an excellent texture and satisfactory surface characteristics (no stickiness, no sliminess, stain resistance, and scratch resistance), which is free from an element that causes generation of hazardous gases, and which has preferable processability. The composition contains 0.2 to 5.0 parts by weight of a higher fatty acid amide, 0.05 to 5.0 parts by weight of a surfactant, and 100 parts by weight of a mixture of a propylene-ethylene copolymer and a hydrogenated diene copolymer, the mixture containing 80 to 50 parts by weight of the hydrogenated diene copolymer and 20 to 50 parts by weight of the propylene-ethylene copolymer. PTL 6 states that the composition provides an excellent texture (no stickiness). Unfortunately, the composition often encounters difficulty in being used for applications requiring high rigidity and strength, such as automobile interior parts.

A composition having both improved physical properties and texture has also been proposed. For example, PTL 7 discloses a polymer molding composition suitable for producing molded articles having favorable rigidity, high scratch resistance, and a highly pleasant and soft texture. The polymer molding composition contains 5 to 90 wt% soft material, 5 to 60 wt% glass material serving as a filler, and 3 to 70 wt% thermoplastic polymer. Although PTL 7 states that a molded article prepared from the composition has favorable rigidity, low surface hardness, high scratch resistance, and a pleasant and soft texture, PTL 7 does not mention the grain transfer characteristics or flexural modulus of the molded article. Thus, the levels of these properties are not known.

As described above, incorporation of a filler into a polypropylene resin composition is often required for improving the rigidity of a molded article prepared from the composition. Unfortunately, the filler incorporation may result in poor grain transfer characteristics or surface texture (e.g., softness) of the molded article. In contrast, incorporation of an elastomer or a soft polyolefin into a polypropylene resin composition is often required for an improvement in the texture of a molded article prepared from the composition. Unfortunately, the polymer incorporation may result in low rigidity or heat resistance of the molded article. Thus, difficulty is encountered in improvements in all these properties by a single means.

PTL 1: Japanese Unexamined Patent Application Publication No. 2002-3691
PTL 2: Japanese Unexamined Patent Application Publication No. 2011-79924
PTL 3: Japanese Unexamined Patent Application Publication No. 2011-132294
PTL 4: Japanese Unexamined Patent Application Publication No. 2009-155522
PTL 5: Japanese Unexamined Patent Application Publication No. 2002-206034
PTL 6: Japanese Unexamined Patent Application Publication No. H07-292212
PTL 7: Japanese Translation of PCT International Application Publication No. 2009-506177 (corresponding to WO2007/025663)

Moreover, JP 2012-87263A describes a molded article using a propylene-based resin composition.

In consideration of the problems involved in the related art, an object of the present invention is to provide a fiber-reinforced polypropylene resin composition, and a molded article prepared therefrom having good grain transfer characteristics, a soft surface texture, reduced weld lines, high rigidity, and high heat resistance.

The present inventors have conducted extensive studies for solving the above-described problems. Consequently, the inventors have found that the problems can be solved by providing a fiber-reinforced polypropylene resin composition containing a specific propylene-ethylene random copolymer and a specific fiber material, and optionally containing a specific propylene-ethylene block copolymer, a thermoplastic elastomer, and/or a propylene polymer resin in specific proportions, or providing a molded article prepared from the composition. The present invention has been accomplished on the basis of this finding.

A first aspect of the present invention provides a fiber-reinforced polypropylene resin composition comprising 100 parts by weight of a propylene-ethylene random copolymer (A) and 10 to 200 parts by weight of a fiber (C), the propylene-ethylene random copolymer (A) having properties (A-i) and (A-ii):

(A-i): a peak melting temperature (Tm) of 110 to 148°C determined by DSC, and
(A-ii): a melt flow rate (230°C, 2.16 kg load) of 0.5 to 200 g/10 min; and the fiber (C) comprising:
(C-i): at least one of a glass fiber having a length of 2 to 20 mm and a carbon fiber having a length of 1 to 20 mm,

wherein the propylene-ethylene random copolymer (A) has an ethylene content of 2 to 3 wt%.

A second aspect of the present invention provides a fiber-reinforced polypropylene resin composition according to the first or second aspect, further comprising 10 to 250 parts by weight of a propylene-ethylene block copolymer (B) relative to 100 parts by weight of the propylene-ethylene random copolymer (A), the propylene-ethylene block copolymer (B) characterized by items (B-i) to (B-iv):

(B-i): the copolymer is prepared by sequential polymerization, in the presence of a metallocene catalyst, of 30 to 95 wt% propylene homopolymer or propylene-ethylene random copolymer component (B-A) in a first step, the propylene-ethylene random copolymer component having an ethylene content of 7 wt% or less, and 70 to 5 wt% propylene-ethylene random copolymer component (B-B) having an ethylene content higher by 3 to 20 wt% than that of the component (B-A) in a second step;
(B-ii): the copolymer has a peak melting temperature (Tm) of 110 to 150°C determined by DSC;
(B-iii): a single peak at 0°C or lower on a temperature-loss tangent curve (tan δ curve) is obtained by solid viscoelasticity measurement; and
(B-iv): the copolymer has a melt flow rate (230°C, 2.16 kg load) of 0.5 to 200 g/10 min.

A third aspect of the present invention provides a fiber-reinforced polypropylene resin composition according to the first or second aspect, further comprising 5 to 200 parts by weight of a thermoplastic elastomer (D) relative to 100 parts by weight of the propylene-ethylene random copolymer (A), the thermoplastic elastomer (D) having properties (D-i) and (D-ii):

(D-i): a density of 0.86 to 0.92 g/cm$^3$, and
(D-ii): a melt flow rate (230°C, 2.16 kg load) of 0.5 to 100 g/10 min.

A fourth aspect of the present invention provides a fiber-reinforced polypropylene resin composition according to any of the first to third aspects, further comprising 5 to 50 parts by weight of a propylene polymer resin (E) relative to 100 parts by weight of the propylene-ethylene random copolymer (A), the propylene polymer resin (E) characterized by items (E-i) to (E-iii):

(E-i): the propylene polymer resin (E) is a propylene homopolymer;
(E-ii): the resin has a melt flow rate (230°C, 2.16 kg load) of 0.5 to 300 g/10 min; and
(E-iii): the resin has a peak melting temperature (Tm) of 155 to 168°C determined by DSC.

A fifth aspect of the present invention provides a fiber-reinforced polypropylene resin composition according to any of the first to fourth aspects, wherein the fiber (C) is glass fiber having a length of 2 to 20 mm.

A sixth aspect of the present invention provides a molded article prepared from a fiber-reinforced polypropylene resin composition according to any of the first to fifth aspects.

A seventh aspect of the present invention is drawn to the molded article according to the sixth aspect, which has a grained surface.

The molded article of the present invention, which is prepared from the fiber-reinforced polypropylene resin composition of the invention, has good grain transfer characteristics, a soft surface texture, reduced weld lines, high rigidity, and high heat resistance.

Thus, the molded article is suitable for various applications; for example, automobile parts including automobile

EP 2 930 209 B2

interior/exterior parts, such as instrument panels, glove compartments, console boxes, door trims, armrests, grip knobs, various trims, ceiling parts, housings, pillars, mud guards, bumpers, fenders, rear doors, and fan shrouds, and parts in engine compartments; parts for electric/electronic devices, such as televisions and vacuum cleaners; various industrial parts; parts for household facilities, such as toilet seats; and building materials.

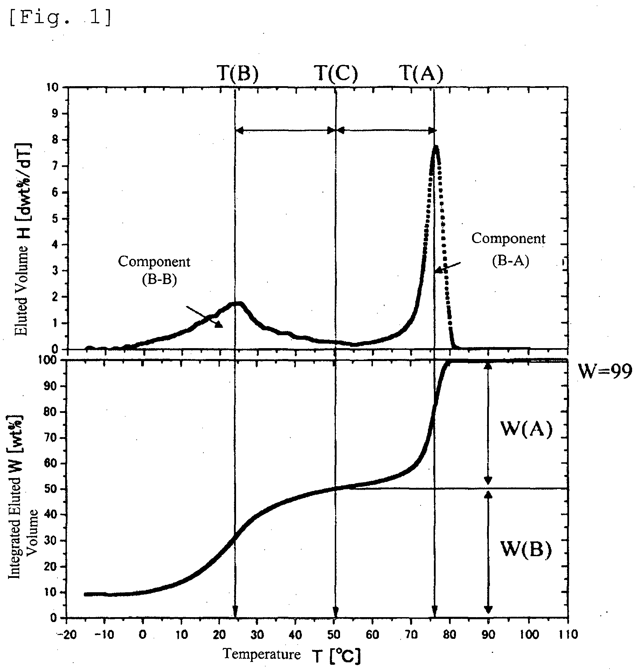

FIG. 1 shows the eluted volume and integrated eluted volume determined by temperature rising elusion fractionation (TREF).

The present invention relates to a fiber-reinforced polypropylene resin composition comprising a specific propylene-ethylene random copolymer (A) and a specific fiber (C), and optionally comprising a specific propylene-ethylene block copolymer (B), a thermoplastic elastomer (D), and/or a propylene polymer resin (E), the components (A) to (E) being contained in specific proportions. The invention also relates to a molded article prepared from the composition.

Now will be described in detail components used in the present invention, the fiber-reinforced polypropylene resin composition comprising the components, and the molded article prepared from the composition.

1. Propylene-ethylene random copolymer (A)

The propylene-ethylene random copolymer (A) used in the present invention has the following properties (A-i) and (A-ii) :

(A-i): a peak melting temperature (Tm) of 110 to 148°C determined by DSC, and
(A-ii): a melt flow rate (230°C, 2.16 kg load) of 0.5 to 200 g/10 min.

Because the propylene-ethylene random copolymer (A) used in the present invention contains a low crystalline component, the molded article, which is prepared from the fiber-reinforced polypropylene resin composition of the present invention (hereinafter also referred to simply as "resin composition"), is provided with favorable characteristics, such as good grain transfer characteristics and a soft surface texture.

The propylene-ethylene random copolymer (A) used in the present invention has an ethylene content of 2 to 3 wt%. An ethylene content below 0.1 wt% in the propylene-ethylene random copolymer (A) may cause poor grain transfer characteristics or surface texture of the molded article prepared from the resin composition. In contrast, an ethylene content exceeding 10 wt% may cause low rigidity of the molded article prepared from the resin composition.

The ethylene content in the propylene-ethylene random copolymer (A) is determined by $^{13}$C-NMR, as in the case of the below-described propylene-ethylene block copolymer (B).

Two or more different propylene-ethylene random copolymers (A) may be used in combination.

(1) Requirements

(A-i) Peak melting temperature (Tm)

The propylene-ethylene random copolymer (A) used in the present invention has a peak melting temperature Tm of 110°C to 148°C, more preferably 120°C to 145°C, still more preferably 125°C to 145°C, Tm being determined by differential scanning calorimetry (DSC). A peak melting temperature Tm of lower than 110°C may cause low rigidity of the molded article prepared from the resin composition, whereas a peak melting temperature Tm of higher than 150°C may lead to a poor weld appearance. Tm can be controlled by modifying the type of a catalyst used or the amount of ethylene copolymerized with propylene.

The peak melting temperature (Tm) is determined with a differential scanning calorimeter (e.g., DSC6200 manufactured by Seiko Instruments Inc.). A 5.0mg of sample is maintained at 200°C for five minutes, cooled to 40°C at a rate of 10°C/min for crystallization, and then heated at a rate of 10°C/min for melting.

(A-ii) Melt flow rate (MFR)

The propylene-ethylene random copolymer (A) used in the present invention has a melt flow rate MFR (230°C, 2.16 kg load) of 0.5 to 200 g/10 min, preferably 1 to 150 g/10 min, more preferably 5 to 100 g/10 min. A melt flow rate MFR below 0.5 g/10 min may cause a poor weld appearance, whereas a melt flow rate MFR exceeding 200 g/10 min may lead to a poor surface texture. MFR can be controlled by, for example, modifying polymerization conditions (e.g., the polymerization temperature or the amount of hydrogen added) or using a molecular weight depressant.

MFR is determined in accordance with JIS K7210 at a temperature of 230°C and a load of 2.16 kg.

6

(2) Q value

The propylene-ethylene random copolymer (A) used in the present invention preferably has a Q value of 2 to 5, more preferably 2.3 to 4.8, still more preferably 2.5 to 4.5. A Q value below 2 results in poor surface quality, whereas a Q value exceeding 5 leads to a poor weld appearance. The Q value can be controlled by modifying the type of a catalyst used or polymerization conditions, or adjusting the amount of a molecular weight depressant added.

The Q value is defined by the ratio (Mw/Mn) of the weight average molecular weight (Mw) to the number average molecular weight (Mn), which are determined by gel permeation chromatography (GPC). GPC conditions used in the present invention will now be described as below. The Q value may be determined with any similar chromatograph.

Chromatograph: GPC 150C manufactured by Waters Corporation
Detector: 1A Infrared Spectrophotometer (measuring wavelength: 3.42 $\mu$m) manufactured by MIRAN
Column: three columns of AD806M/S manufactured by Showa Denko K.K. (the columns were calibrated by measuring monodispersion polystyrene manufactured by Tosoh Corporation (a 0.5 mg/mL solution of each of A500, A2500, F1, F2, F4, F10, F20, F40, and F288) and approximating logarithmic values of elution volume and molecular weight by a quadratic expression. The molecular weight of a sample, in terms of polypropylene, was determined with viscosity equations of polystyrene and polypropylene, where coefficients of the viscosity equation of polystyrene: $\alpha$=0.723 and log K=-3.967, and coefficients of the viscosity equation of polypropylene: $\alpha$=0.707 and log K=-3.616).
Measuring temperature: 140°C
Concentration: 20 mg/10 mL
Injection volume: 0.2 mL
Solvent: o-dichlorobenzene
Flow rate: 1.0 mL/min

(3) Isotactic triad fraction

The propylene-ethylene random copolymer (A) used in the present invention preferably has high isotacticity (stereoregularity). The propylene-ethylene random copolymer (A) preferably has an isotactic triad fraction ([mm] fraction), which is a parameter of isotacticity, of 95% or more, more preferably 96% or more.

The [mm] fraction is the percentage of triad propylene units in which the methyl branches are directed in the same direction, among all head-to-tail coupled triad propylene units in the polymer chain. A high [mm] fraction indicates that the methyl groups of the polypropylene molecular chain are arranged in an isotactic manner.

The [mm] fraction is determined in accordance with the following $^{13}$C-NMR spectroscopy. Specifically, a sample (350 to 500 mg) is completely dissolved in a solvent mixture of o-dichlorobenzene (2 mL) and deuterated benzene (0.5 mL), which is a lock solvent, in a 10-mm$\phi$ NMR sample tube, and the sample is then analyzed by complete proton decoupling at 130°C. Measuring conditions are as follows: a flip angle of 90° and pulse intervals of 5T1 or more (T1 is the longest spin-lattice relaxation time of methyl group). In a propylene copolymer, methylene and methine groups have a T1 shorter than that of a methyl group. Thus, all the carbon atoms in the sample have a magnetization recovery rate of 99% or more under the aforementioned measuring conditions. Furthermore, data are acumulated for 20 hours or longer with the NMR spectrometer at a carbon resonance frequency of 100 MHz or more for quantification of trace components.

A chemical shift of 21.8 ppm is assigned to the carbon peak of the methyl group of the third unit in head-to-tail coupled pentad propylene units in which the methyl branches are directed in the same direction. The chemical shifts of other carbon peaks are determined on the basis of this value. Specifically, the peak observed in a range of 21.2 to 22.5 ppm is attributed to the methyl group of the second unit in triad propylene units represented by [mm], the peak observed in a range of 20.5 to 21.2 ppm is attributed to the methyl group of the second unit in triad propylene units represented by [mr], and the peak observed in a range of 19.5 to 20.5 ppm is attributed to the methyl group of the second unit in triad propylene units represented by [rr].

The [mm] fraction is calculated by the following expression on the basis of the percentages of the structures [mm], [mr], and [rr].

[F1]

$$\text{mm fraction (\%)} = \frac{\text{PPP [mm]}}{\text{PPP [mm]} + \text{PPP [mr]} + \text{PPP [rr]}} \times 100$$

PPP[mm], PPP[mr], and PPP[rr] in the expression are determined on the basis of the areas of peaks attributed to the head-to-tail coupled triad propylene units [mm], [mr], and [rr], respectively.

(4) Preparation of copolymer

The propylene-ethylene random copolymer (A) used in the present invention can be produced by any method using, for example, a metallocene catalyst or a Ziegler catalyst. In particular, a copolymer produced in the presence of a metallocene catalyst is preferably used, from the viewpoint of excellent grain transfer characteristics and texture of the molded article.

A copolymer produced by using a metallocene catalyst is preferably used particularly for applications emphasizing grain transfer characteristics. A copolymer produced in the presence of a Ziegler catalyst and having a Q value adjusted with a molecular weight depressant can provide effects comparable to those obtained from the copolymer produced in the presence of a metallocene catalyst.

(i) Metallocene catalyst

Any metallocene catalyst can be used, so long as it enables production of the propylene-ethylene random copolymer (A) used in the present invention. In order to meet the requirements of the present invention, a metallocene catalyst is preferably used which contains, for example, a component (a), a component (b), and an optional component (c) described below.

Component (a): at least one metallocene transition metal compound selected from transition metal compounds represented by Formula (1).
Component (b): at least one solid component selected from the following components (b-1) to (b-4):

(b-1): a fine particulate carrier supporting an organoaluminum oxy-compound,
(b-2): a fine particulate carrier supporting a Lewis acid or an ionic compound reactive with the component (a) to convert the component (a) into a cation,
(b-3): fine particulate solid acid, and
(b-4): an ion-exchangeable layered silicate salt.

Component (c): an organoaluminum compound.

The component (a) may be at least one metallocene transition metal compound selected from transition metal compounds represented by Formula (1):

$$Q(C_5H_{4-a}R^1_a)(C_5H_{4-b}R^2_b)MeXY \qquad (1).$$

In Formula (1), Q represents a divalent binding group for cross-linking of two conjugated five-membered ring ligands. Examples of the binding group include divalent hydrocarbon groups, silylene and oligosilylene groups, silylene and oligosilylene groups each having a hydrocarbon substituent, and a germylene group having a hydrocarbon substituent. Of these, preferred are divalent hydrocarbon groups and a silylene group having a hydrocarbon substituent.

Each of X and Y represents a hydrogen atom, a halogen atom, a hydrocarbon group, an alkoky group, an amino group, a nitrogen-containing hydrocarbon group, a phosphorus-containing hydrocarbon group, or a silicon-containing hydrocarbon group. Of these, preferred are, for example, a hydrogen atom, a chlorine atom, a methyl group, an isobutyl group, a phenyl group, a dimethylamino group, and a diethylamino group. X and Y may be identical to or different from each other.

Each of $R^1$ and $R^2$ represents a hydrogen atom, a hydrocarbon group, a halogenated hydrocarbon group, a silicon-containing hydrocarbon group, a nitrogen-containing hydrocarbon group, an oxygen-containing hydrocarbon group, a boron-containing hydrocarbon group, or a phosphorus-containing hydrocarbon group. Specific examples of the hydrocarbon group include a methyl group, an ethyl group, a propyl group, a butyl group, a hexyl group, an octyl group, a phenyl group, a naphthyl group, a butenyl group, and a butadienyl group. Typical examples of the halogenated hydrocarbon group, the silicon-containing hydrocarbon group, the nitrogen-containing hydrocarbon group, the oxygen-containing hydrocarbon group, the boron-containing hydrocarbon group, and the phosphorus-containing hydrocarbon group include a methoxy group, an ethoxy group, a phenoxy group, a trimethylsilyl group, a diethylamino group, a diphenylamino group, a pyrazolyl group, an indolyl group, a dimethylphosphino group, a diphenylphosphino group, a diphenylboron group, and a dimethoxyboron group. Of these, preferred are hydrocarbon groups having 1 to 20 carbon atoms, and particularly preferred are a methyl group, an ethyl group, a propyl group, and a butyl group. Adjacent $R^1$ and $R^2$ may be

bonded together to form a ring. The ring may have a substituent, such as a hydrocarbon group, a halogenated hydrocarbon group, a silicon-containing hydrocarbon group, a nitrogen-containing hydrocarbon group, an oxygen-containing hydrocarbon group, a boron-containing hydrocarbon group, or a phosphorus-containing hydrocarbon group.

Me represents a metal atom selected from titanium, zirconium, and hafnium. Preferred are zirconium and hafnium.

In Formula (1), each of a and b is the number of substituents.

Of the above-described components (a), a transition metal compound suitable for production of the propylene-ethylene random copolymer (A) used in the present invention is one composed of ligands having a substituted cyclopentadienyl, indenyl, fluorenyl, or azulenyl group cross-linked with a silylene, germylene, or alkylene group having a hydrocarbon substituent. Particularly preferred is a transition metal compound composed of ligands having a 2,4-substituted indenyl or 2,4-substituted azulenyl group cross-linked with a silylene or germylene group having a hydrocarbon substituent.

Specific non-limiting examples of the transition metal compound include dimethylsilylenebis(2-methyl-4-phenylindenyl)zirconium dichloride, diphenylsilylenebis(2-methyl-4-phenylindenyl)zirconium dichloride, dimethylsilylenebis(2-methylbenzindenyl)zirconium dichloride, dimethylsilylenebis{2-isopropyl-4-(3,5-diisopropylphenyl)indenyl}zirconium dichloride, dimethylsilylenebis(2-propyl-4-phenanthrylindenyl)zirconium dichloride, dimethylsilylenebis(2-methyl-4-phenylazulenyl)zirconium dichloride, dimethylsilylenebis{2-methyl-4-(4-chlorophenyl)azulenyl}zirconium dichloride, dimethylsilylenebis(2-ethyl-4-phenylazulenyl)zirconium dichloride, dimethylsilylenebis(2-isopropyl-4-phenylazulenyl)zirconium dichloride, dimethylsilylenebis{2-ethyl-4-(2-fluorobiphenyl)azulenyl}zirconium dichloride, and dimethylsilylenebis{2-ethyl-4-(4-t-butyl-3-chlorophenyl)azulenyl}zirconium dichloride. Other examples of preferred compounds include those prepared by replacing the silylene group of any of these specific compounds with a germylene group, or replacing zirconium thereof with hafnium. The catalyst component, which is not an essential element of the present invention, has been described with reference to only typical examples without extensive enumeration. It should be understood that these examples should not be construed to limit the scope of the present invention.

The component (b) is at least one solid component selected from the aforementioned components (b-1) to (b-4). These components are well known and can be appropriately selected from those known in the art. Specific examples thereof and methods producing therefor are detailed in, for example, Japanese Unexamined Patent Application Publication Nos. 2002-284808, 2002-53609, 2002-69116, and 2003-105015.

The component (b) is particularly preferably an ion-exchangeable layered silicate salt of component (b-4). More preferred is an ion-exchangeable layered silicate salt which has undergone a chemical treatment such as treatment with an acid, an alkali, a salt, or an organic substance.

The optional component (c) is, for example, an organoaluminum compound represented by Formula (2):

$$AlR_aP_{3-a} \qquad (2)$$

(wherein R represents a hydrocarbon group having 1 to 20 carbon atoms, P represents a hydrogen atom, a halogen atom, or an alkoxy group, and a satisfies the relation $0<a\leq3$). Examples of the organoaluminum compound include trialkylaluminum compounds, such as trimethylaluminum, triethylaluminum, tripropylaluminum, and triisobutylaluminum; and halogen- or alkoxy-containing alkylaluminum compounds, such as diethylaluminum monochloride and diethylaluminum monomethoxide. Alternatively, the organoaluminum compound may be an aluminoxane compound such as methylaluminoxane. Of these, trialkylaluminum compounds are particularly preferred.

The catalyst is prepared by bringing the component (a) into contact with the component (b) and the optional component (c). Any known contact method may be used, so long as the method can prepare the catalyst.

The amounts of the components (a), (b), and (c) used can be determined as appropriate. For example, the amount of the component (a) is preferably 0.1 to 1,000 μmol, particularly preferably 0.5 to 500 μmol, relative to 1 g of the component (b). The amount of the component (c) is preferably 0.001 to 100 μmol, particularly preferably 0.005 to 50 μmol, relative to 1 g of the component (b).

The catalyst used in the present invention is preferably subjected to a preliminary polymerization treatment, so that the catalyst is brought into contact with an olefin in advance for polymerization of a small amount of the olefin.

The propylene-ethylene random copolymer (A), which can be produced through the action of the metallocene catalyst, may be a commercially available product. For example, a product of WINTEC series manufactured by Japan Polypropylene Corporation is preferably used.

(ii) Ziegler catalyst

The propylene-ethylene random copolymer (A) can also be produced by using a Ziegler catalyst. Examples of the Ziegler catalyst include a catalyst prepared through reduction of titanium tetrachloride with, for example, an organoaluminum compound, and treatment of the resultant titanium trichloride or titanium trichloride composition with an electron-donating compound for further activation (see, for example, Japanese Unexamined Patent Application Publication Nos. S47-34478, S58-23806, and S63-146906); a catalyst containing an organoaluminum compound, an aromatic carboxylic acid ester, and a titanium trichloride composition prepared through reduction of titanium tetrachloride with an organoaluminum compound, and subsequent treatment of the resultant product with an electron donor and an electron acceptor (see Japanese Unexamined Patent Application Publication Nos. S56-100806, S56-120712, and S58-104907); and a supported catalyst containing magnesium halide, titanium tetrachloride, and an electron donor (see Japanese Unexamined Patent Application Publication Nos. S57-63310, S58-157808, S58-83006, S58-5310, S61-218606, S63-43915, and S63-83116).

The propylene-ethylene random copolymer (A), which can also be produced through the action of the Ziegler catalyst, may be a commercially available product. For example, a product of NOVATEC series manufactured by Japan Polypropylene Corporation is preferably used.

(iii) Polymerization process

A batch process or a continuous process can be used for sequential polymerization. In general, a continuous process is preferred from the viewpoint of productivity. Polymerization techniques include slurry polymerization in an inert hydrocarbon polymerization solvent, such as hexane, heptane, octane, benzene, or toluene; bulk polymerization using propylene as a polymerization solvent; and gas-phase polymerization involving polymerization of propylene serving as a raw material in a gaseous state. These polymerization techniques may be used in combination.

The polymerization can be performed in a common temperature range causing no problem. Specifically, the polymerization temperature is 0°C to 200°C, more preferably 40°C to 100°C.

Although an optimum polymerization pressure may vary depending on the polymerization process selected, the process can be performed in a common pressure range causing no problem. Specifically, the polymerization pressure is 0 MPa to 200 MPa, more preferably 0.1 MPa to 50 MPa, relative to atmospheric pressure. The polymerization process may also use an inert gas such as nitrogen.

Hydrogen may be used as a molecular weight adjusting agent. In such a case, the molar ratio of hydrogen to propylene is $1.0 \times 10^{-6}$ to $1.0 \times 10^{-2}$, preferably $1.0 \times 10^{-5}$ to $0.9 \times 10^{-2}$.

(5) Content

The propylene-ethylene random copolymer (A) is preferably contained in an amount of 20 to 95 parts by weight, more preferably 30 to 90 parts by weight, relative to 100 parts by weight of the resin composition. The propylene-ethylene random copolymer (A) contained in an amount below 20 parts by weight may cause poor grain transfer characteristics of the molded article, which is prepared from the fiber-reinforced composition of the present invention. In contrast, the propylene-ethylene random copolymer (A) contained in an amount exceeding 95 parts by weight may cause low rigidity of the molded article.

2. Propylene-ethylene block copolymer (B)

The propylene-ethylene random copolymer (B) used in the present invention is characterized by the following items (Bi) to (B-iv):

(B-i): the copolymer is prepared by sequential polymerization, in the presence of a metallocene catalyst, of 30 to 95 wt% propylene homopolymer or propylene-ethylene random copolymer component (B-A) in a first step, the propylene-ethylene random copolymer component having an ethylene content of 7 wt% or less, and 70 to 5 wt% propylene-ethylene random copolymer component (B-B) having an ethylene content 3 to 20 wt% higher than that of the component (B-A) in a second step;

(B-ii): the copolymer has a peak melting temperature (Tm) of 110 to 150°C determined by DSC;

(B-iii): the temperature-loss tangent curve (tanδ curve) obtained by solid viscoelasticity measurement has a single peak at 0°C or lower; and

(B-iv): the copolymer has a melt flow rate (230°C, 2.16 kg load) of 0.5 to 200 g/10 min.

The propylene-ethylene block copolymer (B) used in the present invention contains a low crystalline component. In particular, the component (B-B) delays cooling and solidification during a molding process. Thus, the molded article, which is prepared from the resin composition, is provided with favorable characteristics, such as good grain transfer characteristics, a good weld appearance, and a soft texture.

As specified in (B-i), the propylene-ethylene block copolymer (B) used in the present invention is prepared by sequential polymerization of a propylene homopolymer or propylene-ethylene random copolymer component and a propylene-ethylene random copolymer component. Thus, the propylene-ethylene block copolymer (B), which is a block copolymer in a broad sense, does not necessarily have a complete blockiness on the components (B-A) and (B-B).

Two or more different propylene-ethylene block copolymers (B) may be used in combination.

(1) Requirements

(B-i) Preparation of propylene-ethylene block copolymer

The propylene-ethylene block copolymer (B) used in the present invention is prepared by sequential polymerization, in the presence of a metallocene catalyst, of 30 to 95 wt% propylene homopolymer or propylene-ethylene random copolymer component (B-A) in the first step and 70 to 5 wt% propylene-ethylene random copolymer component (B-B) in the second step. The component (B-A) has an ethylene content of 7 wt% or less, preferably 5 wt% or less, more preferably 3 wt% or less, and the component (B-B) has an ethylene content which is 3 to 20 wt%, preferably by 6 to 18 wt%, more preferably by 8 to 16 wt% higher than that of the component (B-A).

A difference in ethylene content between the component (B-A). prepared in the first step and the component (B-B) prepared in the second step below 3 wt% may cause unsatisfactory properties of the molded article, including grain transfer characteristics, weld appearance, and texture. In contrast, a difference in ethylene content between the component (B-A) and the component (B-B) exceeding 20 wt% may reduce the compatibility therebetween.

Thus, the propylene-ethylene block copolymer (B) must be produced by sequential polymerization of components having different ethylene contents in the first and second steps, so that the molded article, which is prepared from the resin composition, is provided with good grain transfer characteristics, a good weld appearance, and a soft texture. Polymerization of the component (B-A) must be followed by polymerization of the component (B-B) for preventing, for example, adhesion of reaction products to the reactor.

The ethylene contents of the components (B-A) and (B-B) are determined by the following methods.

(i) Temperature rising elution fractionation (TREF) and calculation of T(C)

As well known to those skilled in the art, temperature rising elution fractionation (TREF) is used for evaluation of the crystallinity distribution of a propylene-ethylene random copolymer or a propylene-ethylene block copolymer. For example, approaches to measurement are described in detail in the following references:

G. Glockner, J. Appl. Polym. Sci.: Appl. Polym. Symp.; 45, 1-24 (1990),
L. Wild, Adv. Polym. Sci.; 98, 1-47 (1990), and
J. B. P. Soares, A. E. Hamielec, Polymer; 36, 8, 1639-1654 (1995).

In the present invention, the components (B-A) and (B-B) are identified by TREF.

The actual procedure will now be described with reference to FIG. 1, which shows the eluted volume and integrated eluted volume determined by TREF. In the TREF elution curve (a plot of the eluted volume versus temperature), the components (B-A) and (B-B) show elution peaks at T(A) and T(B), respectively, reflecting a difference in crystallinity therebetween. This sufficiently large difference in temperature therebetween enables substantial fractionation of the components at an intermediate temperature T(C) (={T(A)+T(B)}/2).

The lower limit of TREF measuring temperature is -15°C in the apparatus used for this procedure. If the component (B-B) has very low crystallinity or is amorphous, no peak may be observed within the measuring temperature range (in such a case, the concentration of the component (B-B) dissolved in a solvent at the lower limit of measuring temperature (i.e., - 15°C) is detected).

Although T(B) would lies at a temperature equal to or lower than the lower limit of measuring temperature, its value cannot be measured. In such a case, T(B) is defined as -15°C, which is the lower limit of the measuring temperature.

The integrated volume of a component eluted up to T(C) is defined as W(B) wt% and the integrated volume of a component eluted at or above T(C) is defined as W(A) wt%. In such a case, W(B) substantially corresponds to the volume of the component (B-B), which has low crystallinity or is amorphous, and W(A) substantially corresponds to the volume of the component (B-A), which has relatively high crystallinity. As illustrated in FIG. 1, the aforementioned temperatures and volumes are determined with the eluted volume curve obtained by TREF.

(TREF measurement)

In the present invention, TREF measurement is performed as follows: A sample is dissolved in o-dichlorobenzene (ODCB (containing 0.5 mg/mL BHT)) at 140°C to prepare a solution. The solution is introduced into a TREF column at 140°C, cooled to 100°C at a rate of 8°C/min, and then cooled to -15°C at a rate of 4°C/min, followed by maintaining at this temperature for 60 minutes. Thereafter, ODCB (containing 0.5 mg/mL BHT) is fed through the column at a flow rate of 1 mL/min, to elute the component dissolved in ODCB at -15°C in the TREF column for 10 minutes. The temperature of the column is then linearly elevated to 140°C at a rate of 100°C/hour, thereby preparing an elution curve.

The apparatus and conditions used in the present invention are summarized below. Any similar apparatus may be used for TREF.

TREF column: 4.3 mm$\phi$×150 mm stainless steel column
Column packing material: 100 $\mu$m surface-deactivated glass beads
Heating system: aluminum heating block
Cooling system: Peltier element (cooled with water)
Temperature distribution: ±0.5°C
Temperature controller: digital program controller KP1000 manufactured by Chino Corporation (valve oven)
Heating system: air bath oven
Measuring temperature: 140°C
Temperature distribution: ±1°C
Valve: 6-way valve, 4-way valve
Injection system: loop injector
Detector: wavelength-fixed infrared detector, MIRAN 1A manufactured by FOXBORO
Detection wavelength: 3.42 $\mu$m
High temperature flow cell: micro flow cell for LC-IR, optical path length: 1.5 mm, window shape: elongated circle of 2$\phi$×4 mm, synthetic sapphire window plate
Sample concentration: 5 mg/mL
Sample injection volume: 0.1 mL

(ii) Fractionation of component (B-A) and component (B-B):

Based on T(C) determined by the aforementioned TREF measurement, the component (B-B), which can be eluted at T(C), and the component (B-A), which cannot be eluted at T(C), are fractionated with a fractionator by temperature rising column fractionation. The ethylene content in each of the components is determined by NMR.

Temperature rising column fractionation is described in detail in, for example, the following reference.

Macromolecules; 21, 314-319 (1988)
Specifically, the following method is used in the present invention.

(Fractionation conditions)

A cylindrical column having a diameter of 50 mm and a height of 500 mm is filled with a glass bead carrier (80 to 100 mesh) and maintained at 140°C.

Subsequently, 200 mL of an ODCB solution of a sample (10 mg/mL) prepared through dissolution at 140°C is added to the column. The temperature of the column is then lowered to 0°C at a rate of 10°C/hour. The column is maintained at 0°C for one hour, and the column is then heated to T(C) at a rate of 10°C/hour and maintained at T(C) for one hour. Throughout this process, the temperature of the column is controlled with an accuracy of ±1°C.

While the temperature of the column is maintained at T(C), ODCB (800 mL) at T(C) is fed through the column at a flow rate of 20 mL/min, so that the component in the column which can be eluted at T(C) is eluted and recovered.

Subsequently, the temperature of the column is elevated to 140°C at a rate of 10°C/min and maintained at 140°C for one hour. ODCB (800 mL) at 140°C is then fed through the column at a rate of 20 mL/min, so that the component which cannot be eluted at T(C) is eluted and recovered.

Each of the polymer-containing solutions obtained by fractionation is concentrated to 20 mL with an evaporator, and the polymer is precipitated in a 5-fold volume of methanol. The precipitated polymer is recovered by filtration and dried with a vacuum dryer overnight.

(iii) Determination of ethylene content by $^{13}$C-NMR:

The ethylene content in each of the components (B-A) and (B-B) obtained by the aforementioned fractionation is determined through analysis of $^{13}$C-NMR spectra measured by complete proton decoupling. Specifically, the conditions used in the present invention will now be described below.

Spectrometer: GSX-400 manufactured by JEOL Ltd. (carbon resonance frequency: 400 MHz)

Solvent: ODCB/deuterated benzene = 4/1 (volume ratio)
Concentration: 100 mg/mL
Temperature: 130°C
Pulse angle: 90°
Pulse interval: 15 seconds
Cumulative number: 5,000 or more

Spectral assignment may be performed in accordance with, for example, the following reference: Macromolecules; 17, 1950 (1984).

Table 1 shows assignment of spectra measured under the aforementioned conditions. In Table 1, symbols, such as $S_{\alpha\alpha}$, are in conformity with the notation described in the following reference. In Table 1, P denotes methyl carbon, S methylene carbon, and T methyne carbon.

Carman, Macromolecules; 10, 536 (1977)

[Table 1]

| Chemical shift (ppm) | Assignment |
|---|---|
| 45 to 48 | $S_{\alpha\alpha}$ |
| 37.8 to 37.9 | $S_{\alpha\gamma}$ |
| 37.4 to 37.5 | $S_{\alpha\delta}$ |
| 33.1 | $T_{\delta\delta}$ |
| 30.9 | $T_{\beta\delta}$ |
| 30.6 | $S_{\gamma\gamma}$ |
| 30.2 | $S_{\gamma\delta}$ |
| 29.8 | $S_{\delta\delta}$ |
| 28.7 | $T_{\beta\beta}$ |
| 27.4 to 27.6 | $S_{\beta\delta}$ |
| 24.4 to 24.7 | $S_{\beta\beta}$ |
| 19.1 to 22.0 | P |

Six different triads of PPP, PPE, EPE, PEP, PEE, and EEE may be present in the copolymer chain, wherein "P" represents a propylene unit and "E" represents an ethylene unit in the copolymer chain. As described in Macromolecules, 15, 1150 (1982), for example, the concentrations of these triads are correlated with the peak intensities in a spectrum by the following relations <1> to <6>:

$$[PPP] = k \times I(T\beta\beta) \qquad <1>$$

$$[PPE] = k \times I(T\beta\delta) \qquad <2>$$

$$[EPE] = k \times I(T\delta\delta) \qquad <3>$$

$$[PEP] = k \times I(S\beta\beta) \qquad <4>$$

$$[PEE] = k \times I(S\beta\delta) \qquad <5>$$

$$[EEE] = k \times [I(S\delta\delta)/2 + I(S\gamma\delta)/4] \qquad <6>$$

In the aforementioned relations, the parentheses [] correspond to the fraction of a triad; for example, [PPP] refers to the fraction of a PPP triad relative to all triads.

Thus, the following relation is satisfied:

$$\mathtt{[PPP]+[PPE]+[EPE]+[PEP]+[PEE]+[EEE]\ =\ 1\qquad <7>.}$$

In the aforementioned relations, k is a constant and I represents the intensity of a spectrum. For example, $I(T_{\beta\beta})$ refers to the intensity of the peak at 28.7 ppm assigned to $T_{\beta\beta}$.

The fraction of each triad is determined by the relations <1> to <7>, and the ethylene content is determined by the following expression:

$$\mathtt{ethylene\ content\ (mol\%)\ =\ ([PEP]+[PEE]+[EEE])\times 100.}$$

The propylene-ethylene random copolymer used in the present invention may contain a small number of propylene hetero bonds (2,1-bond and/or 1,3-bond), which generate the following minute peaks.

[Table 2]

| Chemical shift (ppm) | Assignment |
|---|---|
| 42.0 | $S_{\alpha\alpha}$ |
| 38.2 | $T_{\alpha\gamma}$ |
| 37.1 | $S_{\alpha\delta}$ |
| 34.1 to 35.6 | $S_{\alpha\beta}$ |
| 33.7 | $T_{\gamma\gamma}$ |
| 33.3 | $T_{\gamma\delta}$ |
| 30.8 to 31.2 | $T_{\beta\gamma}$ |
| 30.5 | $T_{\beta\delta}$ |
| 30.3 | $S_{\alpha\beta}$ |
| 27.3 | $S_{\beta\gamma}$ |

For determination of a precise ethylene content, peaks derived from these hetero bonds need to be taken into account for calculation. However, the peaks derived from hetero bonds are difficult to completely resolve and identify, and the number of the hetero bonds is small. Thus, in the present invention, the ethylene content is determined by the relations <1> to <7>, as in the case of analysis of copolymers produced with a Ziegler-Natta catalyst and containing substantially no hetero bonds.

The ethylene content (wt%) is converted from the ethylene content (mol%) by the following expression:

$$\mathtt{ethylene\ content\ (wt\%)\ =\ (28\times X/100)/\{28\times X/100+42\times(1-}$$

$$\mathtt{X/100)\}\times 100}$$

where X is ethylene content in mol%. The ethylene content [E]W of the entire propylene-ethylene block copolymer is calculated by the following expression:

$$\mathtt{[E]W=\{[E]A\times W(A)+[E]B\times W(B)\}/100(wt\%)}$$

where [E]A represents the above-measured ethylene content in the component (B-A), [E]B represents the above-measured ethylene content in the component (B-B), and W(A) and W(B) represent the weight percentages (wt%) of the respective components calculated by TREF.

(B-ii) Peak melting temperature (Tm)

The propylene-ethylene block copolymer (B) used in the present invention has a peak melting temperature Tm of 110°C to 150°C, preferably 115°C to 148°C, more preferably 120°C to 145°C, Tm being determined by differential scanning calorimetry (DSC). A peak melting temperature Tm of lower than 110°C may cause a decrease in rigidity of the molded article prepared from the resin composition, whereas a peak melting temperature Tm of higher than 150°C may lead to poor grain transfer characteristics, weld appearance, or texture. The Tm of the propylene-ethylene block copolymer (B) can be controlled and determined as in the propylene-ethylene random copolymer (A) described above.

(B-iii) Peak temperature on temperature-loss tangent curve (tanδ curve)

The propylene-ethylene block copolymer (B) used in the present invention shows a single peak at 0°C or lower on a temperature-loss tangent curve (tanδ curve) obtained by solid viscoelasticity measurement (DMA).
In the present invention, no phase separation of the components (B-A) and (B-B) is required in the propylene-ethylene block copolymer (B) for providing the molded article prepared from the resin composition with good grain transfer characteristics, a favorable weld appearance, and a soft texture. No phase separation leads to a single peak at 0°C or lower on the tanδ curve.
In contrast, in the case of phase separation of the components (B-A) and (B-B), the amorphous portion in the component (B-A) exhibits a glass transition temperature different from that of the amorphous portion in the component (B-B), resulting in two or more peaks on the tanδ curve.
Solid viscoelasticity measurement by DMA is performed by applying a sinusoidal strain with a specific frequency to a strip of sample, and detecting the resultant stress. In the present invention, the frequency is set at 1 Hz, and the measuring temperature is elevated stepwise from -60°C to a melting temperature of the sample.
The strain is recommended to be about 0.1% to 0.5%. On the basis of the resultant stress, the storage elastic modulus G' and loss elastic modulus G" are determined by a well known method, and a loss tangent defined by the ratio (loss elastic modulus/storage elastic modulus) is plotted versus temperature. The molded article prepared from the propylene-ethylene block copolymer (B) shows a sharp peak in a temperature range of 0°C or lower. In general, a peak at 0°C or lower on the tanδ curve indicates the glass transition of the amorphous portion.
The apparatus used in the present invention for solid viscoelasticity measurement by DMA is specifically described below. Any similar apparatus may be used for DMA.
The sample used in DMA is a strip (10 mm in width, 18 mm in length, and 2 mm in thickness) cut out of a sheet having a thickness of 2 mm prepared by injection molding under the following conditions:

The measuring apparatus: ARES manufactured by Rheometric Scientific, Inc.
Standard Number: JIS-7152 (ISO294-1)
Frequency: 1 Hz
Measuring temperature: stepwise heating from -60°C to such a temperature that the sample is melted
Strain: a range of 0.1 to 0.5%
Molding machine: TU-15 injection molding machine manufactured by Toyo Machinery & Metal Co., Ltd.
Set temperature of molding machine: 80, 80, 160, 200, 200, and 200°C from the hopper bottom
Mold temperature: 40°C
Injection rate: 200 mm/sec (rate in the cavity of the mold)
Injection pressure: 800 kgf/cm$^2$
Holding pressure: 800 kgf/cm$^2$
Pressure holding time: 40 seconds
Shape of mold: flat plate (thickness: 2 mm, width: 30 mm, length: 90 mm)

(B-iv) Melt flow rate (MFR)

The propylene-ethylene block copolymer (B) used in the present invention has a melt flow rate MFR (230°C, 2.16 kg load) of 0.5 to 200 g/10 min, preferably 3 to 150 g/10 min, more preferably 5 to 50 g/10 min. A melt flow rate MFR below 0.5 g/10 min may cause poor moldability (fluidity) of the resin composition or poor grain transfer characteristics of the molded article, whereas a melt flow rate MFR exceeding 200 g/10 min may lead to a poor appearance after thermal treatment (bleeding-out resistance). MFR can be controlled by, for example, modifying polymerization conditions (e.g., the polymerization temperature, the amount of a comonomer, or the amount of hydrogen added) or using a molecular weight depressant.

(2) Preparation of copolymer

Use of a metallocene catalyst is essential for producing the propylene-ethylene block copolymer (B) used in the present invention.

(i) Metallocene catalyst

Any metallocene catalyst can be used which can produce the propylene-ethylene block copolymer (B) used in the present invention. The metallocene catalyst used may be the same as exemplified above for producing the propylene-ethylene random copolymer (A).

(ii) Sequential polymerization

Production of the propylene-ethylene block copolymer (B) used in the present invention requires sequential polymerization of the components (B-A) and (B-B).
A batch process or a continuous process can be used for sequential polymerization. In general, a continuous process is preferred from the viewpoint of productivity.
In the batch process, the components (B-A) and (B-B) can be polymerized in a single reactor while polymerization conditions are being varied with time. Two or more reactors may be connected in parallel in use within the advantageous effects of the present invention.
The continuous process involves use of a production facility including two or more reactors connected in series, because the process requires individual polymerization of the components (B-A) and (B-B). Alternatively, a plurality reactors may be connected in series and/or in parallel for producing each of the components (B-A) and (B-B) within the advantageous effects of the present invention.

(iii) Polymerization process

The propylene-ethylene block copolymer (B) can be prepared through any polymerization technique, such as slurry polymerization, bulk polymerization, or gas-phase polymerization. These polymerization techniques may be used in combination. The propylene-ethylene block copolymer (B) may be polymerized under supercritical conditions intermediate between those for bulk polymerization and gas-phase polymerization. Supercritical polymerization is substantially the same as gas-phase polymerization, and thus is categorized thereinto without distinction therefrom.
Although the component (B-A) may be produced through any process, the component (B-A), which exhibits relatively low crystallinity, is preferably produced through a gas-phase process for preventing, for example, adhesion of reaction products to the reactor.
The component (B-B) is preferably produced through a gas-phase process, because the component (B-B) is readily dissolved in an organic solvent such as a hydrocarbon or liquefied propylene.
Most preferably, the propylene-ethylene block copolymer (B) is prepared by the continuous process, in which the component (A-A) is produced through bulk polymerization or gas-phase polymerization, and the component (A-B) is then produced through gas-phase polymerization.

(iv) Other polymerization conditions

The polymerization can be uneventfully performed in a common temperature range. Specifically, the polymerization temperature is 0°C to 200°C, more preferably 40°C to 100°C.
Although an optimum polymerization pressure may vary depending on the polymerization process selected, the process can be performed in a common pressure range without any difficulty. Specifically, the polymerization pressure is 0 MPa to 200 MPa, more preferably 0.1 MPa to 50 MPa, relative to atmospheric pressure. The polymerization process may also use an inert gas such as nitrogen.
For the case of sequential polymerization of the component (b-A) in the first step and the component (B-B) in the second step, a polymerization inhibitor is preferably added to the reaction system in the second step. Addition of a polymerization inhibitor to the reactor for ethylenepropylene random copolymerization in the second step leads to improvements in properties (e.g., fluidity) of the resultant powder or quality of products (e.g., gel). This technique has been widely studied (refer to the methods described in, for example, Japanese Examined Patent Publication No. S63-54296 and Japanese Unexamined Patent Application Publication Nos. H07-25960 and 2003-2939). The present invention preferably uses this technique.

(3) Content

The propylene-ethylene block copolymer (B) used in the present invention is preferably contained in an amount of 10 to 250 parts by weight, more preferably 30 to 220 parts by weight, still more preferably 50 to 200 parts by weight, relative to 100 parts by weight of the propylene-ethylene random copolymer (A). The propylene-ethylene block copolymer (B) contained in an amount below 10 parts by weight may cause poor grain transfer characteristics, weld appearance, or texture of the molded article, which is prepared from the resin composition. In contrast, the propylene-ethylene block copolymer (B) contained in an amount exceeding 250 parts by weight may cause poor rigidity or appearance after thermal treatment (bleeding-out resistance) of the molded article.

3. Fiber (C)

The fiber (C) used in the present invention satisfies the following requirement:
(C-i): at least one of a glass fiber having a length of 2 to 20 mm and a carbon fiber having a length of 1 to 20 mm.
The fiber (C) used in the present invention, which has high tensile elastic modulus and high tensile strength, contributes to improvements in properties of the molded article prepared from the resin composition, including physical properties, such as rigidity and heat resistance, dimensional stability (e.g., a reduction in linear expansion coefficient), and environmental adaptability.
A particularly preferred fiber (C) is glass fiber, from the viewpoint of achieving the advantageous effects of the present invention satisfactorily, as well as the viewpoint of facilitating production of the fiber-reinforced composition of the present invention or reducing production cost.
Two or more different fibers (C) may be used in combination. The fiber (C) may be used in the form of a so-called masterbatch; specifically, the fiber (C) is preliminarily incorporated into the propylene-ethylene random copolymer (A) or the propylene-ethylene block copolymer (B) at a relatively high concentration.
Any inorganic or organic filler which does not satisfies the requirement (C-i), such as talc, mica, glass beads, glass balloons, whisker, or organic fiber, may be used in combination with the fiber (C), so long as the effects of the present invention are not considerably impaired.
Now will be described in detail various fibers satisfying the requirement (C-i) in the present invention.

(1) Glass fiber

Any type of glass fiber can be used. Examples of the glass used for fiber include E-glass, C-glass, A-glass, and S-glass. Among them, E-glass is preferred. The glass fiber is produced by any method known in the art.
Two or more different glass fibers may be used in combination.
The glass fiber has a length of 2 to 20 mm, preferably 3 to 10 mm. A fiber length below 2 mm may cause unsatisfactory properties, such as rigidity, of the molded article prepared from the resin composition. In contrast, a fiber length exceeding 20 mm may lead to poor grain transfer characteristics, texture, or moldability (fluidity).
As used herein, the term "fiber length" refers to the length of common roving or strand glass fiber which is to be melt-kneaded without any pretreatment. When glass-fiber-containing pellets are prepared as described below by combining numerous continuous glass fiber filaments together, and melt-extruding the combined fiber filaments, the term "fiber length" refers to the length of one side (in the extrusion direction) of each pellet, the length being substantially the same as that of the fiber contained in the pellet.
As used herein, the term "substantially" refers to the case where the length (in the extrusion direction) of glass-fiber-containing pellets is the same as that of 50% or more (preferably 90% or more) of the entire fiber filaments contained in the pellets, and the fiber filaments are barely broken during preparation of the pellets.
In the present invention, the fiber length is determined by averaging the lengths of 100 or more fiber filaments measured with a microscope.
When the fiber (C) is glass fiber, the length thereof is specifically determined as follows: Glass fiber filaments are mixed with a aqueous surfactant solution, the resultant mixture is added dropwise onto a thin glass plate, and the lengths of 100 or more glass fiber filaments spread on the plate are measured with a digital microscope (e.g., VHX-900 manufactured by Keyence Corporation), followed by averaging the observed lengths.
The glass fiber preferably has a diameter of 3 to 25 $\mu$m, more preferably 6 to 20 $\mu$m. A fiber diameter below 3 $\mu$m may cause breakage of the glass fiber during production of the resin composition or the molded article. In contrast, a fiber diameter exceeding 25 $\mu$m may cause unsatisfactory properties, such as rigidity, of the molded article prepared from the resin composition, due to a reduction in aspect ratio of the fiber.
The fiber diameter is determined with 100 or more fiber filaments prepared by cutting the fiber in a direction perpendicular to the length direction, and averaging the diameters of the cut surfaces of the filaments measured with a microscope.

The surface of the glass fiber may be preliminarily treated or untreated. In order to improve the dispersion of the glass fiber in the polypropylene resin, the surface of the glass fiber is preferably treated with, for example, an organic silane coupling agent, a titanate coupling agent, an aluminate coupling agent, a zirconate coupling agent, a silicone compound, a higher fatty acid, a fatty acid metal salt, or a fatty acid ester.

The glass fiber may be subjected to sizing (surface) treatment with a sizing agent. Examples of the sizing agent include epoxy, aromatic urethane, aliphatic urethane, acrylic, and maleic anhydride-modified polyolefin sizing agents. Such sizing agents preferably melts at 200°C or lower, because they must be melt-kneaded with the polypropylene resin.

The surface of the glass fiber may be preliminarily treated or untreated. In order to improve the dispersibility of the glass fiber in the polypropylene resin, the glass fiber is preferably surface-treated with, for example, an organic silane coupling agent, a titanate coupling agent, an aluminate coupling agent, a zirconate coupling agent, a silicone compound, a higher fatty acid, a fatty acid metal salt, or a fatty acid ester.

Examples of the organic silane coupling agent used for surface treatment include vinyltrimethoxysilane, $\gamma$-chloropropyltrimethoxysilane, $\gamma$-methacryloxypropyltrimethoxysilane, $\gamma$-aminopropyltrimethoxysilane, and 3-acryloxy-propyltrimethoxysilane. Examples of the titanate coupling agent include isopropyltriisostearoyl titanate, isopropyltris(dioctyl pyrophosphate) titanate, and isopropyltri(N-aminoethyl) titanate. Examples of the aluminate coupling agent include acetoalkoxyaluminium diisopropylate. Examples of the zirconate coupling agent include tetra(2,2-diallyloxymethyl)butyl di(tridecyl)phosphite zirconate, and neopentyl(diallyl)oxy trineodecanoyl zirconate. Examples of the silicone compound include silicone oils and silicone resins.

Examples of the higher fatty acid used for surface treatment include oleic acid, capric acid, lauric acid, palmitic acid, stearic acid, montanoic acid, caleic acid, linoleic acid, rosin acid, linolenic acid, undecanoic acid, and undecenoic acid. Examples of the higher fatty acid metal salt include sodium, lithium, calcium, magnesium, zinc, and aluminum salts of fatty acids having nine or more carbon atoms, such as stearic acid and montanoic acid. Of these, preferred are calcium stearate, aluminum stearate, calcium montanate, and sodium montanate. Examples of the fatty acid ester include polyhydric alcohol fatty acid esters such as glycerin fatty acid esters, $\alpha$-sulfone fatty acid esters, polyoxyethylene sorbitan fatty acid esters, sorbitan fatty acid esters, polyethylene fatty acid esters, and sucrose fatty acid esters.

Although the surface treating agent may be used in any amount, the amount is preferably 0.01 to 5 parts by weight, more preferably 0.1 to 3 parts by weight, relative to 100 parts by weight of the glass fiber.

The glass fiber may be used in the form of so-called chopped strand glass fiber prepared through cutting of original glass fiber into strands of desired length. In particular, chopped strand glass fiber prepared through cutting of bundled glass fiber strands into a length of 2 mm to 20 mm is preferably used, from the viewpoints of shrinkage resistance, rigidity, and impact strength of the molded article prepared from the resin composition.

Specific examples of the glass fiber include T480H manufactured by Nippon Electric Glass Co., Ltd.

The glass fiber may be used in the form of "glass-fiber-containing pellets" prepared by combining numerous continuous glass fiber filaments together, and melt-extruding the combined fiber filaments with, for example, a specific amount of the propylene-ethylene random copolymer (A) and/or the propylene-ethylene block copolymer (B). Such glass-fiber-containing pellets are preferred from the viewpoint of further improving the grain transfer characteristics and rigidity of the molded article prepared from the resin composition.

As described above, the fiber length of each glass-fiber-containing pellet corresponds to the length thereof in the extrusion direction. The fiber length of each pellet is preferably 2 to 20 mm.

The glass-fiber-containing pellets may be produced through any method known in the art.

The glass-fiber-containing pellets preferably have a glass fiber content of 20 wt% to 70 wt% on the basis of the total amount (100 wt%) of the pellets.

A glass fiber content below 20 wt% in the glass-fiber-containing pellets used in the present invention may cause unsatisfactory properties, such as low rigidity, of the molded article prepared from the resin composition. In contrast, a glass fiber content exceeding 70 wt% in the glass-fiber-containing pellets used in the present invention may cause poor grain transfer characteristics, texture, or moldability (fluidity).

(2) Carbon fiber

Any type of carbon fiber can be used. As used herein, the term "carbon fiber" encompasses fine carbon fiber; for example, ultrafine carbon fiber having a diameter of 500 nm or less. Two or more different carbon fibers may be used in combination.

The carbon fiber has a length of 1 to 20 mm, preferably 3 to 10 mm. A carbon fiber length below 1 mm may result in a shorter final fiber length in the molded article prepared from the resin composition, leading to unsatisfactory properties, such as low shrinkage resistance, rigidity, and impact strength, of the molded article. In contrast, a carbon fiber length exceeding 20 mm may cause poor grain transfer characteristics, texture, or moldability (fluidity).

The length of the carbon fiber is determined in the same manner as the glass fiber described above.

The carbon fiber preferably has a diameter of 2 to 20 $\mu$m, more preferably 3 to 15 $\mu$m. A fiber diameter below

2 μm may cause breakage of the carbon fiber during production of the resin composition or the molded article, leading to unsatisfactory properties, such as low rigidity, of the molded article prepared from the resin composition. In contrast, a fiber diameter exceeding 20 μm may cause unsatisfactory properties, such as low rigidity, of the molded article prepared from the resin composition, due to a reduction in aspect ratio of the fiber.

The fiber diameter is determined by a method known in the art; for example, in accordance with JIS R7607 (former JIS R7601) or by microscopy.

As described above, any type of carbon fiber can be used. Examples of suitable carbon fibers include polyacrylonitrile (PAN) carbon fiber made of mainly acrylonitrile, pitch carbon fiber made of mainly tar pitch, and rayon carbon fiber. Although any of these carbon fibers is highly adaptable to the present invention, PAN carbon fiber is preferred from the viewpoint of its compositional purity or homogeneity. These carbon fibers may be used alone or in combination. The carbon fiber may be produced through any process.

Specific examples of the PAN carbon fiber include "Pyrofil" (trade name) manufactured by Mitsubishi Rayon Co., Ltd., "Torayca" (trade name) manufactured by Toray Industries, Inc., and "Besfight" (trade name) manufactured by Toho Tenax Co., Ltd. Specific examples of the pitch carbon fiber include "Dialead" (trade name) manufactured by Mitsubishi Plastics, Inc., "Donacarbo" (trade name) manufactured by Osaka Gas Chemicals Co., Ltd., and "Kreca" (trade name) manufactured by Kureha Corporation.

As in the case of the glass fiber described above, the carbon fiber may be used in the form of "carbon-fiber-containing pellets" prepared by combining numerous continuous carbon fiber filaments together, and melt-extruding the combined fiber filaments with, for example, a specific amount of the propylene-ethylene random copolymer (A) and/or the propylene-ethylene block copolymer (B). Such carbon-fiber-containing pellets are preferred from the viewpoint of further improving the grain transfer characteristics and rigidity of the molded article prepared from the resin composition.

As described above, the fiber length of each carbon-fiber-containing pellet corresponds to the length thereof in the extrusion direction. The fiber length of each pellet is preferably 2 to 20 mm.

The carbon fiber generally has a tensile elastic modulus of about 200 to 1,000 GPa. The carbon fiber used in the present invention preferably has a tensile elastic modulus of 200 to 900 GPa, more preferably 200 to 300 GPa, from the viewpoints of economy and the strength of the molded article prepared from the resin composition of the present invention.

The carbon fiber generally has a density of about 1.7 to 5 g/cm$^3$. The carbon fiber used in the present invention preferably has a density of 1.7 to 2.5 g/cm$^3$, from the viewpoints of weight reduction and economy.

The tensile elastic modulus and the density are determined by methods known in the art. For example, the tensile elastic modulus is determined in accordance with JIS R7606 (former JIS R7601), and the density is determined in accordance with JIS R7603 (former JIS R7601).

The carbon fiber may be used in the form of so-called chopped (strand) carbon fiber (hereinafter also referred to simply as "CCF") prepared through cutting of original carbon fiber into strands of desired length. The carbon fiber may optionally be subjected to sizing treatment with any sizing agent. In the present invention, CCF is preferably used for further improving the properties, such as low rigidity, of the molded article prepared from the resin composition.

Specific examples of CCF include those formed of PAN carbon fiber, such as "Pyrofil Chopped" (trade name) manufactured by Mitsubishi Rayon Co., Ltd., "Torayca Chopped" (trade name) manufactured by Toray Industries, Inc., and "Besfight Chopped" (trade name) manufactured by Toho Tenax Co., Ltd; and those formed of pitch carbon fiber, such as "Dialead Chopped Fiber" (trade name) manufactured by Mitsubishi Plastics, Inc., "Donacarbo Chopped" (trade name) manufactured by Osaka Gas Chemicals Co., Ltd., and "Kreca Chopped" (trade name) manufactured by Kureha Corporation.

The carbon-fiber-containing pellets preferably have a carbon fiber content of 20 to 70 wt% on the basis of the total amount (100 wt%) of the pellets.

A carbon fiber content below 20 wt% in the carbon-fiber-containing pellets used in the present invention may cause unsatisfactory the properties, such as low shrinkage resistance, scratch resistance, rigidity, and impact strength, of the molded article prepared from the fiber-reinforced composition. In contrast, a carbon fiber content exceeding 70 wt% in the glass-fiber-containing pellets used in the present invention may cause poor grain transfer characteristics, texture, or moldability (fluidity).

(3) Content

The fiber (C) used in the present invention is contained in an amount of 10 to 200 parts by weight, preferably 20 to 180 parts by weight, more preferably 25 to 160 parts by weight, still more preferably 30 to 150 parts by weight, relative to 100 parts by weight of the propylene-ethylene random copolymer (A). The fiber (C) contained in an amount below 10 parts by weight may cause unsatisfactory properties, such as low shrinkage resistance, rigidity, and impact strength, of the molded article. In contrast, the fiber (C) contained in an amount exceeding 200 parts by weight may cause poor moldability (fluidity) of the resin composition and poor grain transfer characteristics or texture of the molded article.

The content of the fiber (C) in the specification is an actually measured value. For example, when glass-fiber-containing pellets are used, the fiber (C) content in the pellets corresponds to the actually measured value.

4. Thermoplastic elastomer (D)

The thermoplastic elastomer (D) used in the present invention has the following properties (D-i) and (D-ii):

(D-i): a density of 0.86 to 0.92 g/cm$^3$, and
(D-ii): a melt flow rate (230°C, 2.16 kg load) of 0.5 to 100 g/10 min.

The thermoplastic elastomer (D) used in the present invention can provide the molded article prepared from the resin composition with, for example, a soft texture.

As used herein, the "thermoplastic elastomer (D)" refers to a thermoplastic elastomer selected from olefin elastomers and styrene elastomers. In other words, the thermoplastic elastomer (D) differs from the aforementioned propylene-ethylene random copolymer (A) and propylene-ethylene block copolymer (B).

Examples of the olefin elastomer include ethylene-$\alpha$-olefin copolymer elastomers, such as ethylene-propylene copolymer elastomers (EPR), ethylene-butene copolymer elastomers (EBR), ethylene-hexene copolymer elastomers (EHR), and ethylene-octene copolymer elastomers (EOR); ethylene-$\alpha$-olefin-diene terpolymer elastomers, such as ethylene-propylene-ethyliderienorbornene terpolymers, ethylene-propylene-butadiene terpolymers, and ethylene-propylene-isoprene terpolymers.

Examples of the styrene elastomer include styrene-butadiene-styrene triblock terpolymer elastomers (SBS), styrene-isoprene-styrene triblock terpolymer elastomers (SIS), styrene-ethylerie-butylene terpolymer elastomers (SEB), styrene-ethylene-propylene terpolymer elastomers (SEP), styrene-ethylene-butylene-styrene tetrapolymer elastomers (SEBS), styrene-ethylene-butylene-ethylene tetrapolymer elastomers (SEBC), hydrogenated styrene-butadiene elastomers (HSBR), styrene-ethylene-propylene-styrene tetrapolymer elastomers (SEPS), styrene-ethylene-ethylene-propylene-styrene pentapolymer elastomers (SEEPS), and styrene-butadiene-butylene-styrene tetrapolymer elastomers (SBBS).

Other examples of the thermoplastic elastomer include hydrogenated polymeric elastomers, such as ethylene-ethylene-butylene-ethylene tetrapolymer elastomers (EEBE).

Of these, preferred is at least one elastomer selected from the group consisting of ethylene-octene copolymer elastomers (EOR), ethylene-butene copolymer elastomers (EBR), and ethylene-propylene copolymer elastomers. Such preferred elastomers can reduce production cost and can provide molded articles prepared from resin compositions with excellent shrinkage resistance, texture, and impact strength.

Two or more different thermoplastic elastomers (D) may be used in combination.

(1) Requirements

(D-i) Density

The thermoplastic elastomer (D) used in the present invention has a density of 0.86 to 0.92 g/cm$^3$, preferably 0.865 to 0.91 g/cm$^3$, more preferably 0.87 to 0.90 g/cm$^3$.

A density below 0.86 g/cm$^3$ may cause low rigidity or heat resistance (heat distortion temperature or bleeding-out resistance) of the molded article prepared from the resin composition, whereas a density exceeding 0.92 g/cm$^3$ may cause poor texture.

(D-ii) Melt flow rate (MFR)

The thermoplastic elastomer (D) used in the present invention has a melt flow rate MFR (230°C, 2.16 kg load) of 0.5 to 100 g/10 min, preferably 1.5 to 50 g/10 min, more preferably 2 to 15 g/10 min. A melt flow rate MFR below 0.5 g/10 min may cause poor moldability (fluidity) of the resin composition or poor grain transfer characteristics of the molded article, whereas a melt flow rate MFR exceeding 100 g/10 min may lead to poor heat resistance (heat distortion temperature or bleeding-out resistance) of the molded article.

(2) Preparation of elastomer

The thermoplastic elastomer (D) used in the present invention is, for example, an olefin elastomer, such as an ethylene-$\alpha$-olefin copolymer elastomer or an ethylene-$\alpha$-olefin-diene terpolymer elastomer. Such a copolymer elastomer is prepared through polymerization of the corresponding monomers in the presence of a catalyst.

Examples of the catalyst include titanium compounds, such as titanium halides; organoaluminum-magnesium complexes, such as alkylaluminum-magnesium complexes; Ziegler catalysts, such as alkylaluminum compounds and alkylaluminum chlorides; and metallocene catalysts disclosed in, for example, WO91/04257.

The thermoplastic elastomer (D) can be polymerized through any process, such as a gas-phase fluidized-bed process, a solution process, or a slurry process. If the thermoplastic elastomer (D) is a styrene elastomer, it can be prepared through a common anionic polymerization process or a polymer hydrogenation process.

These thermoplastic elastomers are commercially available in the form of various products from many manufacturers. Thus, a product with desired properties may be purchased for use.

(3) Content

The thermoplastic elastomer (D) used in the present invention is preferably contained in an amount of 5 to 200 parts by weight, more preferably 20 to 170 parts by weight, still more preferably 30 to 150 parts by weight, relative to 100 parts by weight of the propylene-ethylene random copolymer (A). The thermoplastic elastomer (D) contained in an amount below 5 parts by weight may cause poor grain transfer characteristics or texture, whereas the thermoplastic elastomer (D) contained in an amount exceeding 200 parts by weight may cause poor heat resistance (heat distortion temperature or bleeding-out resistance) or rigidity of the molded article, which is prepared from the resin composition of the present invention.

5. Propylene polymer resin (E)

The propylene polymer resin (E) used in the present invention is characterized by the following items (E-i) to (E-iii):

(E-i): the resin is a propylene homopolymer;
(E-ii): the resin has a melt flow rate (230°C, 2.16 kg load) of 0.5 to 300 g/10 min; and
(E-iii): the resin has a peak melting temperature (Tm) of 155 to 168°C determined by DSC.

The propylene polymer resin (E) is preferably incorporated into the resin composition of the present invention particularly for imparting heat resistance thereto.

Two or more different propylene polymer resins (E) may be used in combination.

(1) Requirements

(E-i) Propylene homopolymer

The propylene polymer resin (E) used in the present invention is a propylene homopolymer. This can provide the molded article with rigidity and heat resistance.

The propylene homopolymer can be produced through any process known in the art.

Any polymerization catalyst known in the art can be used. Examples of the catalyst include a Ziegler-Natta catalyst prepared through combination of a titanium compound and an organoaluminum compound, and a metallocene catalyst (disclosed in, for example, Japanese Unexamined Patent Application Publication No. H05-295022).

For example, an organoaluminum compound may be used as a promoter.

The catalyst may contain any polymerization additive for an improvement in stereoregularity or control of particulate properties, soluble components, and/or molecular distribution. Examples of the polymerization additive include organosilicon compounds, such as diphenyldimethoxysilane and tert-butylmethyldimethoxysilane, ethyl acetate, and butyl benzoate.

A batch process or a continuous process can be used for sequential polymerization. In general, a continuous process is preferred from the viewpoint of productivity. Polymerization techniques include slurry polymerization in an inert hydrocarbon polymerization solvent, such as hexane, heptane, octane, benzene, or toluene; bulk polymerization using propylene as a polymerization solvent; and gas-phase polymerization involving polymerization of propylene serving as a raw material in a gaseous state. These polymerization techniques may be used in combination.

The polymerization can be performed in a common temperature range without any difficulty. Specifically, the polymerization temperature is 0°C to 200°C, more preferably 40°C to 100°C.

Although an optimum polymerization pressure may vary depending on the polymerization process selected, the process can be performed in a common pressure range without no difficulty. Specifically, the polymerization pressure is 0 MPa to 200 MPa, more preferably 0.1 MPa to 50 MPa, relative to atmospheric pressure. The polymerization process may also use an inert gas, such as nitrogen.

Hydrogen may be used as a molecular weight adjusting agent. In such a case, the molar ratio of hydrogen to propylene is $1.0 \times 10^{-6}$ to $1.0 \times 10^{-2}$, preferably $1.0 \times 10^{-5}$ to $0.9 \times 10^{-2}$.

(E-ii) Melt flow rate (MFR)

The propylene polymer resin (E) used in the present invention has a melt flow rate MFR (230°C, 2.16 kg load) of 0.5 to 300 g/10 min, preferably 10 to 250 g/10 min, more preferably 20 to 200 g/10 min. A melt flow rate MFR below 0.5 g/10 min may cause poor moldability (fluidity) of the resin composition or poor grain transfer characteristics of the molded article, whereas a melt flow rate MFR exceeding 300 g/10 min may cause low impact strength of the molded article. MFR can be controlled with, for example, a molecular weight depressant.

(E-iii) Peak melting temperature (Tm)

The propylene polymer resin (E) used in the present invention has a peak melting temperature Tm of 155 to 168°C, preferably 157 to 166°C, more preferably 158 to 165°C, Tm being determined by DSC. A peak melting temperature Tm of lower than 155°C may cause low rigidity or heat resistance of the molded article prepared from the resin composition, whereas a peak melting temperature Tm of higher than 168°C may lead to poor grain transfer characteristics or a poor weld appearance. Tm can be controlled by modifying the type or molecular weight of a catalyst used.

Tm is determined as in the propylene-ethylene random copolymer (A) described above.

(3) Content

The propylene polymer resin (E) used in the present invention is preferably contained in an amount of 5 to 50 parts by weight, preferably 10 to 45 parts by weight, more preferably 13 to 42 parts by weight, still more preferably 15 to 40 parts by weight, relative to 100 parts by weight of the propylene-ethylene random copolymer (A).

The propylene polymer resin (E) contained in an amount below 5 parts by weight may result in failure to impart heat resistance to the molded article prepared from the resin composition, whereas the propylene polymer resin (E) contained in an amount exceeding 50 parts by weight may cause poor grain transfer characteristics or a poor weld appearance of the molded article.

6. Optional additive

The resin composition of the present invention may contain any optional additive, such as a modified polyolefin, a molecular weight depressant, a lubricant, or an antioxidant, so long as the advantageous effects of the present invention are not considerably impaired.

Two or more different optional additives may be used in combination. The optional additive may be added to the resin composition, or may be preliminarily added to any of the components (A) to (E); for example, to the propylene-ethylene random copolymer (A). Two or more different optional additives may be added to combination into any of the components (A) to (E). In the present invention, the optional additive may be added to any amount. The optional additive is generally contained in an amount of about 0.01 to 0.5 parts by weight relative to 100 parts by weight of the resin composition. The amount of the optional additive is appropriately determined depending on the intended use thereof.

(1) Modified polyolefin

The modified polyolefin is an acid-modified polyolefin and/or a hydroxyl-modified polyolefin. The modified polyolefin improves the interfacial strength between the propylene-ethylene random copolymer (A) and the fiber (C), and thus is effective for improvements in physical properties, such as rigidity and impact strength, of the molded article prepared from the resin composition.

The acid-modified polyolefin may be one known in the art. The acid-modified polyolefin is prepared by graft copolymerization of a polyolefin, such as polyethylene, polypropylene, an ethylene-$\alpha$-olefin copolymer, an ethylene-$\alpha$-olefin-unconjugated diene compound copolymer (e.g., EPDM), or an ethylene-aromatic monovinyl compound-conjugated diene compound copolymer rubber, with an unsaturated carboxylic acid, such as maleic acid or maleic anhydride. For example, the graft copolymerization involves reaction of any of the aforementioned polyolefins with an unsaturated carboxylic acid in a suitable solvent in the presence of a radical generator, such as benzoyl peroxide. A component such as an unsaturated carboxylic acid or a derivative thereof may be introduced in the polymer chain through random or block copolymerization of the component with a monomer for the polyolefin.

The hydroxyl-modified polyolefin is a modified polyolefin containing a hydroxyl group. The modified polyolefin may have one or more hydroxyl groups at any position, for example, main chain terminals or side chains. The olefin resin forming the hydroxyl-modified polyolefin may be, for example, a homopolymer or copolymer of an $\alpha$-olefin, such as ethylene, propylene, butene, 4-methylpentene-1, hexene, octene, nonene, decene, or dodecene, or a copolymer of any of these $\alpha$-olefins and a copolymerizable monomer. Examples of the hydroxyl-modified polyolefin include hydroxyl-modified polyethylenes (e.g., low-, medium-, and high-density polyethylenes, linear low-density polyethylenes, ultrahigh molecular weight polyethylenes, ethylene-(meth)acrylic acid ester copolymers, and ethylene-vinyl acetate copolymers); and hydroxyl-modified polypropylenes (e.g., polypropylene homopolymers, such as isotactic polypropylenes, random copolymers of propylene and an $\alpha$-olefin, such as ethylene, butene, or hexane, and propylene-$\alpha$-olefin block copolymers); and hydroxyl-modified poly(4-methylpentene-1).

(2) Molecular weight depressant

The molecular weight depressant is effective for imparting or improving properties, such as moldability (fluidity).
The molecular weight depressant may be, for example, an organic peroxide or a decomposition (oxidation) promoter. The molecular weight depressant is preferably an organic peroxide.
Examples of the organic peroxide include benzoyl peroxide, t-butyl perbenzoate, t-butyl peracetate, t-butylperoxyisopropyl carbonate, 2,5-di-methyl-2,5-di-(benzoylperoxy)hexane, 2,5-di-methyl-2,5-di-(benzoylperoxy)hexyne-3, t-butyl di-peradipate, t-butylperoxy-3,5,5-trimethylhexanoate, methyl ethyl ketone peroxide, cyclohexanone peroxide, di-t-butyl peroxide, dicumyl peroxide, 2,5-di-methyl-2,5-di-(t-butylperoxy)hexane, 2,5-di-methyl-2,5-di-(t-butylperoxy)hexyne-3, 1,3-bis-(t-butylperoxyisopropyl)benzene, t-butylcumyl peroxide, 1,1-bis-(t-butylperoxy)-3,3,5-trimethylcyclohexane, 1,1-bis-(t-butylperoxy)cyclohexane, 2,2-bis-t-butylperoxybutane, p-menthane hydroperoxide, di-isopropylbenzene hydroperoxide, cumene hydroperoxide, t-butyl hydroperoxide, p-cymene hydroperoxide, 1,1,3,3-tetra-methylbutyl hydroperoxide, and 2,5-di-methyl-2,5-di-(hydroperoxy)hexane. These organic peroxides may be used alone or in combination.

(3) Lubricant

The lubricant is effective for improving, for example, the mold releasability of the molded article during molding of the resin composition.
Examples of the lubricant include fatty acid amides, such as oleamid, stearamid, erucamide, and behenamide, butyl stearate, and silicon oil.

(4) Antioxidant

The antioxidant is effective for preventing degradation of the quality of the molded article prepared from the resin composition.
Examples of the antioxidant include phenolic antioxidants, phosphorus-based antioxidants, and sulfur-based antioxidants.

(5) Other components

The resin composition of the present invention may contain a thermoplastic resin (e.g., a polyolefin resin, a polyamide resin, or a polyester resin) other than the propylene-ethylene random copolymer (A), the propylene-ethylene block copolymer (B), and the propylene polymer resin (E), or an elastomer (rubber component) other than the thermoplastic elastomer (D), so long as the advantageous effects of the present invention are not considerably impaired.
These optional components are commercially available in the form of various products from many manufacturers. Thus, a product with desired properties may be purchased and used depending on the intended use thereof.

7. Production of fiber-reinforced polypropylene resin composition

The resin composition of the present invention can be produced as follows: The propylene-ethylene random copolymer (A) (hereinafter also referred to simply as "component (A)") is mixed with the fiber (C), and optionally with at least one of the propylene-ethylene block copolymer (B) (hereinafter also referred to simply as "component (B)"), the thermoplastic elastomer (D), and the propylene polymer resin (E), as well as an optional additive. These components are mixed in the above-described proportions by any method known in the art, and the resultant mixture is subjected to a melt-kneading process.
The mixing is generally performed with a mixer, such as a tumbler, a V-blender, or a ribbon blender. The melt-kneading process is generally performed with a kneading machine, such as a single-screw extruder, a twin-screw extruder, a Banbury mixer, a roll mixer, Brabender Plastograph, a kneader, or an agitation granulator for (semi) melt-kneading and granulation. For production of the resin composition through (semi) melt-kneading and granulation, the aforementioned components may be simultaneously kneaded, or may be separately kneaded for improvements in properties of the resin composition. For example, a portion or the entirety of the component (A) may be kneaded with a portion of the fiber (C), and then be kneaded with the remaining components, followed by granulation.

The resin composition of the present invention is preferably produced such that the fiber (C), which is contained in resin composition pellets prepared through the melt-kneading process or in the molded article, has a mean length of 0.3 mm or more, preferably 0.4 mm to 2.5 mm. As used herein, the mean length of the fiber (C), which is contained in the resin composition pellets or the molded article, refers to the average of the lengths of fiber filaments measured with a digital microscope. When the fiber (C) is glass fiber, the length thereof is specifically determined as follow: The resin composition pellets or molded article of the present invention is burnt. The ash containing glass fiber filaments is mixed with an aqueous surfactant solution, the resultant mixture is added dropwise onto a thin glass plate, and the lengths of 100 or more glass fiber filaments spread on the plate are measured with a digital microscope (e.g., VHX-900 manufactured by Keyence Corporation), followed by averaging the measured lengths.

A preferred process for producing the resin composition involves sufficient melt-kneading of the components (A) and (B), the thermoplastic elastomer (D), and the propylene polymer resin (E) with a twin-screw extruder, and subsequent feeding of the fiber (C) to the mixture by, for example, a side feed process, so that sized fiber filaments are dispersed in the mixture while breakage of the fiber is minimized.

Another process involves high-speed stirring of the components (A) to (E) in a Henschel mixer, and kneading of the fiber (C) in the mixture while maintaining these components in a semi-melted state. This stirring granulation process is also preferred because fiber filaments can be readily dispersed in the mixture while breakage of the fiber is minimized.

An alternative production process involves melt-kneading of the components (A) to (E) (other than the fiber (C)) in advance with an extruder to prepare pellets, and mixing the pellets with the aforementioned "fiber (C)-containing pellets" such as glass-fiber-containing pellets or carbon-fiber-containing pellets, to prepare a fiber-reinforced composition. This production process is also preferred for the same reasons as mentioned above.

As described above, a preferred process for producing the fiber-reinforced composition of the present invention involves kneading of the components other than the fiber (C) in a kneading process, and subsequent addition of the fiber (C) to the resultant mixture. Thus, the resin composition of the present invention can be produced by a simple process.

8. Production and properties of molded article

The molded article of the present invention can be prepared through molding of the above-produced fiber-reinforced composition by a well-known molding technique, such as injection molding (e.g., gas injection molding, two-color injection molding, core-back injection molding, or sandwich injection molding), injection compression molding (press injection), extrusion molding, sheet molding, or blow molding. Of these, injection molding or injection compression molding is preferred for preparation of the molded article.

The molded article of the present invention has good grain transfer characteristics and reduced weld lines. The molded article of the present invention is also characterized by a soft surface texture, high rigidity, and high heat resistance.

The molded article of the present invention is produced with economically advantageous components by a simple production process at low cost.

The molded article is suitable for various applications; for example, automobile parts including automobile interior/exterior parts, such as instrument panels, glove compartments, console boxes, door trims, armrests, grip knobs, various trims, ceiling parts, housings, pillars, mud guards, bumpers, fenders, rear doors, and fan shrouds, and parts in engine compartments; parts for electric/electronic products, such as television sets and vacuum cleaners; various industrial parts; parts for household facilities, such as toilet seats; and building materials. The molded article, which exhibits both a soft texture and well-balanced physical properties, is suitable for automobile parts, particularly for interior parts.

Now will be described the properties of the molded article of the present invention.

(1) Grain transfer characteristics

Grain transfer characteristics greatly affect the texture (appearance) of the molded article. Grain transfer characteristics are effectively determined by the ratio of the gloss of a grained surface (grained surface gloss) to the gloss of a mirror surface (mirror surface gloss); i.e., the "grained surface gloss/mirror surface gloss" ratio (gloss ratio). Grain transfer characteristics can be determined to some extent by only the value of "grained surface gloss" (absolute value), because the grained surface exhibits low gloss. However, the gloss ratio indicates grain transfer characteristics with higher accuracy. A lower gloss ratio indicates better grain transfer characteristics.

The molded article of the present invention has good grain transfer characteristics and preferably has a grained surface. The gloss ratio is preferably 0.15 to 0.01, more preferably 0.12 to 0.05.

In the present invention, the gloss ratio is determined by the method described below in Examples.

(2) HDD (D hardness)/flexural modulus (FM)

In general, a polypropylene resin composition tends to exhibit a hard texture as the rigidity thereof increases. In contrast, a more preferred molded article has a low ratio of HDD (D hardness) to flexural modulus (FM) (ratio "HDD (D hardness)/FM (MPa)"). Specifically, the ratio of the hardness of the surface of the molded article to the substantial rigidity thereof is low, and thus the molded article has a soft texture regardless of high rigidity.

The molded article of the present invention has a soft texture regardless of high rigidity. The ratio HDD (D hardness)/FM (MPa) is preferably 0.03 to 0.001, more preferably 0.02 to 0.01.

The HDD (D hardness) is determined in accordance with JIS K7215 at a temperature of 23°C, and the flexural modulus is determined in accordance with JIS K7171 at a temperature of 23°C. They are determined by the methods described below in Examples.

The surface hardness of a molded article prepared from a resin composition having relatively low rigidity and thus high flexibility is determined by a method using a durometer. The method using a durometer includes "type A" and "type D" methods. In each method, a test load which varies in response to the depth of a dent is applied to a sample with an indenter, and the surface hardness of the sample is determined on the basis of the depth of the resultant dent.

The indenter used for the "type A" method has a planar tip of 0.79 mm$\phi$, and the indenter used for the "type D" method has an acicular tip of 0.1 mmR. Thus, the value determined by the "type A" method (HDA (A hardness)) probably reflects not only the state (hardness) in the vicinity of the surface of the target molded article, but also the internal rigidity (hardness) thereof. In contrast, the value determined by the "type D" method (HDD (D hardness)) probably reflects the state (hardness) in the vicinity of the surface of the target molded article more greatly than the internal rigidity (hardness) thereof. Thus, the HDD (D hardness) is an important index for determining whether the molded article has a soft texture. A lower HDD (D hardness) represents a softer texture.

The molded article of the present invention preferably has an HDD (D hardness) of 70 to 50, more preferably 65 to 60.

(3) Heat resistance

The molded article of the present invention has excellent heat resistance and a good appearance even after thermal treatment.

The heat resistance is indicated by, for example, deflection temperature under load (HDT). HDT can be determined in accordance with JIS K7191-1, 2 under a load of 0.45 MPa with a test piece prepared in accordance with JIS K7152-1.

The molded article of the present invention preferably has an HDT (0.45 MPa) of 100 to 150°C, more preferably 120 to 140°C.

The appearance after thermal treatment is evaluated through visual observation of the degree of bleeding-out.

The molded article of the present invention preferably has no bleeding-out, slightly visible but unnoticeable bleeding-out, or visible but practically acceptable bleeding-out.

The appearance after thermal treatment is evaluated under conditions described below in Examples.

(4) Appearance

The molded article of the present invention has a good appearance (weld appearance).

Specifically, the molded article of the present invention preferably has no weld lines, slightly visible weld lines, visible but unnoticeable weld lines, or visible but practicality acceptable weld lines.

The weld appearance is evaluated under conditions described below in Examples.

Examples

The present invention will now be described in detail by way of examples, which should not be construed as limiting the invention thereto.

Methods for evaluation and analysis and materials used in Examples are described below.

1. Evaluation

(1) Gloss (grain transfer characteristics)

- Test piece: flat plate (60x80x2t (mm))
- Target surface: (a flat surface of the test piece treated as described below)

    Grained surface: automobile interior satin grain, depth: 100 $\mu$m
    Mirror surface: #1000

- Molding machine: EC20 injection molding machine manufactured by Toshiba Machine Co., Ltd.
- Molding conditions: molding temperature: 220°C, mold temperature: 40°C, injection pressure: 50 MPa, injection period: 5 seconds, cooling period: 20 seconds
- Glossmeter: VG-2000 manufactured by Nippon Denshoku Industries Co., Ltd.

(i) Mirror surface gloss value (%) (mirror surface gloss)

The gloss of the mirror surface of each test piece was measured with the glossmeter at an incident angle of 60° (n=5).

(ii) Grained surface gloss value (%) (grained surface gloss)

The gloss of the grained surface of each test piece was measured with the glossmeter at an incident angle of 60° (n=5).

(iii) Grain transfer characteristics (gloss ratio)

The ratio of the grained surface gloss value (%) to the mirror surface gloss value (%) (grained surface gloss value/mirror surface gloss value) (gloss ratio) was calculated for evaluation of grain transfer characteristics. A calculated value of 0.15 or less indicates good grain transfer characteristics, and a calculated value of 0.12 or less indicates very good grain transfer characteristics.

(2) HDD (D hardness)

HDD was measured in accordance with JIS K7215 at a temperature of 23°C. Three test pieces for the gloss measurement were disposed and used for HDD measurement.

(3) Rigidity (flexural modulus: FM)

Rigidity was measured in accordance with JIS K7171 at a temperature of 23°C. A test piece for physical property evaluation described below was used.

- Molding machine: EC20 injection molding machine manufactured by Toshiba Machine Co., Ltd.
- Mold: adapted for preparation of two strip test pieces (10×80×4t (mm)) for physical property evaluation
- Molding conditions: molding temperature: 220°C, mold temperature: 40°C, injection pressure: 50 MPa, injection period: 5 seconds, cooling period: 20 seconds

(iv) HDD/FM

The ratio (HDD/FM) of the test piece was calculated for evaluation of the properties thereof (soft texture and high rigidity). A calculated value of 0.03 or less indicates good properties, and a calculated value of 0.02 or less indicates very good properties.

(4) Deflection temperature under load (HDT)

HDT was determined in accordance with JIS K7191-1, 2 under a load of 0.45 MPa with a test piece prepared in accordance with JIS K7152-1.

(5) Appearance after thermal treatment (bleeding-out resistance)

A test piece for the gloss measurement was allowed to stand in an atmosphere at 100°C for 200 hours. Thereafter, the surface of the test piece was visually observed and evaluated for bleeding-out of a rubber component based on the following criteria.

A: No bleeding-out
B: Slightly visible but unnoticeable bleeding-out
C: Visible bleeding-out but practically acceptable
D: Noticeable bleeding-out

(6) Weld line evaluation

- Test piece: flat plate (350×100×3t (mm))
- Grained surface: automobile interior leather grain No. 421, depth: 100 $\mu$m
- Molding machine: IS220 injection molding machine manufactured by Toshiba Machine Co., Ltd.
- Molding conditions: double point gate, molding temperature: 200°C, mold temperature: 30°C, filling period: 4.5 s

A test piece prepared under the aforementioned conditions was visually observed and evaluated for the profile of weld lines based on the following criteria.

A: No weld lines
B: Slightly visible weld lines
C: Visible but unnoticeable weld lines
D: Visible weld lines but practically acceptable
E: Noticeable weld lines and practically unacceptable

2. Materials

(1) Propylene-ethylene random copolymer (A)

A-1: WINTEC WSX02 (manufactured by Japan Polypropylene Corporation)
Metallocene catalyst, MFR (230°C, 2.16 kg load): 25 g/10 min, ethylene content: 3.5 wt%, peak melting temperature (Tm): 125°C, Q value: 2.6, mm fraction: 98%
A-2: NOVATEC MG3F (manufactured by Japan Polypropylene Corporation)
Ziegler catalyst, MFR (230°C, 2.16 kg load): 8 g/10 min, ethylene content: 2.5 wt%, peak melting temperature (Tm): 144°C, Q value: 4.5, mm fraction: 96%

(2) Propylene-ethylene block copolymer (B)

B-1: WELNEX RMG02VC (manufactured by Japan Polypropylene Corporation)
Metallocene catalyst, MFR (230°C, 2.16 kg load): 20 g/10 min, ethylene content: 5.9 wt%, Q value: 2.7, peak melting temperature (Tm): 130°C
In the copolymer B-1, the propylene-ethylene random copolymer component (B-A) prepared in the first step has an ethylene content of 1.8 wt% and a compositional proportion of 56 wt%, and the propylene-ethylene random copolymer component (B-B) prepared in the second step has an ethylene content of 11 wt% and a compositional proportion of 44 wt%. The copolymer B-1 shows a single peak at -11°C on the tan$\delta$ curve.

(3) Fiber (C) or talc

C-1: T480H (manufactured by Nippon Electric Glass Co., Ltd.)
Glass fiber, chopped strand (fiber diameter: 10 $\mu$m, length: 4 mm)
C-2: Talc (manufactured by Fuji Talc Industrial Co., Ltd.)
Mean particle size: 6.3 $\mu$m

In Examples, the components (C-1) and (C-2) may be collectively referred to as the "component (C)."

(4) Thermoplastic elastomer (D)

D-1: Engage EG8200 (manufactured by Dow Chemical Company)

Ethylene-octene copolymer elastomer, MFR (230°C, 2.16 kg load): 10 g/10 min, density: 0.870 g/cm$^3$, form: pellets D-2: Vistamaxx 3000 (manufactured by Exxon Mobil Corporation)
Ethylene-propylene copolymer elastomer, MFR (230°C, 2.16 kg load): 8 g/10 min, density: 0.871 g/cm$^3$, form: pellets D-3: Vistamaxx 3980 (manufactured by Exxon Mobil Corporation)
Ethylene-propylene copolymer elastomer, MFR (230°C, 2.16 kg load): 8 g/10 min, density: 0.879 g/cm$^3$, form: pellets (5) Propylene polymer resin (E) or other propylene polymer resins

E-1: NOVATEC MA04A (manufactured by Japan Polypropylene Corporation)
Propylene homopolymer resin, Ziegler catalyst, MFR (230°C, 2.16 kg load): 40 g/10 min, peak melting temperature (Tm) : 166°C
E-2: NEWCON (manufactured by Japan Polypropylene Corporation)
Propylene-ethylene block copolymer resin, Ziegler catalyst, MFR (230°C, 2.16 kg load): 28 g/10 min, propylene homopolymer component: 73 wt%, propylene-ethylene copolymer component: 27 wt%, ethylene content in propylene-ethylene copolymer component: 37 wt%, Q value: 6.3, peak melting temperature (Tm): 161°C
E-3: NEWCON (manufactured by Japan Polypropylene Corporation)
Propylene-ethylene block copolymer resin, Ziegler catalyst, MFR (230°C, 2.16 kg load): 22 g/10 min, propylene homopolymer component: 61 wt%, propylene-ethylene copolymer component: 39 wt%, ethylene content in propylene-ethylene copolymer component: 53 wt%, Q value: 6.5, peak melting temperature (Tm): 161°C

In Examples, the components (E-1) to (E-3) may be collectively referred to as the "component (E)."

## 3. Examples, Reference Examples and Comparative Examples

**[Examples 1 to 23 and Comparative Examples 1 to 9, Examples 1 to 6, 10 to 13 and 17 to 23 are for reference]**

The components (A) to (E) were mixed based on the formulation shown in Table 3 together with the following additives, and the resultant mixture was kneaded and granulated under the following conditions, to prepare resin pellets.
IRGANOX 1010 (manufactured by BASF) (0.1 parts by weight) and IRGAFOS 168 (manufactured by BASF) (0.05 parts by weight) were added to 100 parts by weight of the composition containing the components (A) to (E).

Kneader: twin-screw extruder "KZW-15-MG" manufactured by Technovel Corporation
Kneading conditions: temperature: 200°C, rotation rate of screw: 400 rpm, discharge rate: 3 kg/Hr

The glass fiber (C-1) was side-fed at the middle of the extruder. The glass fiber (C-1) contained in the resin pellets had a mean length of 0.45 mm to 0.7 mm.
The propylene polymer resins (E-2) and (E-3) were used as base resins in Comparative Examples 2, 3, 6, and 7 instead of the random copolymer (A).

[Table 3]

| | Propylene-ethylene random copolymer (A) | | Propylene-ethylene block copolymer (B) | | Fiber (C) /talc | | Thermoplastic elastomer (D) | | Propylene polymer resin (E) | |
|---|---|---|---|---|---|---|---|---|---|---|
| | Type | Parts by weight | Type | Parts by weight | Type | Parts by weight | Type | Parts by weight | Type | Parts by weight |
| Ex. 1 | A-1 | 100 | | | C-1 | 40 | | | | |
| Ex. 2 | A-1 | 100 | | | C-1 | 70 | | | | |
| Ex. 3 | A-1 | 100 | B-1 | 100 | C-1 | 50 | | | | |
| Ex. 4 | A-1 | 100 | | | C-1 | 50 | D-1 | 50 | | |
| Ex. 5 | A-1 | 100 | | | C-1 | 50 | D-2 | 50 | | |
| Ex. 6 | A-1 | 100 | | | C-1 | 50 | D-3 | 50 | | |
| Ex. 7 | A-2 | 100 | | | C-1 | 50 | D-1 | 50 | | |
| Ex. 8 | A-2 | 100 | | | C-1 | 50 | D-2 | 50 | | |
| Ex. 9 | A-2 | 100 | | | C-1 | 50 | D-3 | 50 | | |
| Ex. 10 | A-1 | 100 | | | C-1 | 60 | D-1 | 80 | | |
| Ex. 11 | A-1 | 100 | B-1 | 60 | C-1 | 50 | D-1 | 40 | | |
| Ex. 12 | A-1 | 100 | B-1 | 60 | C-1 | 50 | D-2 | 40 | | |
| Ex. 13 | A-1 | 100 | B-1 | 60 | C-1 | 50 | D-3 | 40 | | |
| Ex. 14 | A-2 | 100 | B-1 | 60 | C-1 | 50 | D-1 | 40 | | |
| Ex. 15 | A-2 | 100 | B-1 | 60 | C-1 | 50 | D-2 | 40 | | |
| Ex. 16 | A-2 | 100 | B-1 | 60 | C-1 | 50 | D-3 | 40 | | |
| Ex. 17 | A-1 | 100 | B-1 | 50 | C-1 | 130 | D-1 | 50 | | |
| Ex. 18 | A-1 | 100 | B-1 | 120 | C-1 | 70 | D-1 | 50 | | |
| Ex. 19 | A-1 | 100 | B-1 | 100 | C-1 | 100 | D-1 | 100 | | |
| Ex. 20 | A-1 | 100 | B-1 | 230 | C-1 | 100 | D-1 | 70 | | |
| Ex. 21 | A-1 | 100 | B-1 | 230 | C-1 | 170 | D-1 | 160 | | |
| Ex. 22 | A-1 | 100 | | | C-1 | 60 | D-1 | 60 | E-1 | 30 |
| Ex. 23 | A-1 | 100 | B-1 | 200 | C-1 | 150 | D-1 | 50 | E-1 | 50 |
| Comp. Ex. 1 | | | B-1 | 100 | C-1 | 40 | D-1 | 20 | | |
| Comp. Ex. 2 | | | | | C-1 | 40 | | | E-2* | 100 |
| Comp. Ex. 3 | | | | | C-1 | 40 | | | E-3* | 100 |
| Comp. Ex. 4 | | | B-1 | 100 | C-2 | 40 | | | | |
| Comp. Ex. 5 | A-1 | 100 | | | C-2 | 40 | | | | |
| Comp. Ex. 6 | | | | | C-1 | 10 | | | E-2* | 100 |

(continued)

| | Composition | | | | | | | | | | |
|---|---|---|---|---|---|---|---|---|---|---|---|
| | Propylene-ethylene random copolymer (A) | | Propylene-ethylene block copolymer (B) | | Fiber (C) /talc | | Thermoplastic elastomer (D) | | Propylene polymer resin (E) | |
| | Type | Parts by weight | Type | Parts by weight | Type | Parts by weight | Type | Parts by weight | Type | Parts by weight |
| Comp. Ex. 7 | | | | | C-1 | 10 | | | E-3* | 100 |
| Comp. Ex. 8 | | | B-1 | 100 | C-2 | 10 | | | | |
| Comp. Ex. 9 | A-1 | 100 | | | C-2 | 50 | | | | |
| * Propylene polymer resin other than the components (A), (B), and (E) used in the present invention. | | | | | | | | | | |

(2) Molding of resin composition

The resultant pellets were subjected to injection molding under the aforementioned conditions, to prepare a test piece corresponding to each resin composition.

(3) Evaluation

These molded articles were evaluated for physical properties. Table 4 shows the results.

[Table 4]

| | Evaluation | | | | | | | | |
|---|---|---|---|---|---|---|---|---|---|
| | Rigidity | Surface hardness | HDD/ FM | Grain transfer characteristics | | | Heat resistance | | Appearance |
| | Flexural Modulus (FM) | D hardness (HDD) | | Mirror surface gloss | Grained Surface gloss (satin grain) | Gloss ratio | HDT 0.45MPa | Bleeding-out resistance | Weld lines |
| | MPa | - | - | % | % | - | °C | - | - |
| Ex. 1 | 3588 | 70 | 0.020 | 58.9 | 7.8 | 0.13 | 123.7 | A | C |
| Ex. 2 | 5981 | 73 | 0.012 | 56.7 | 7.6 | 0.13 | 127.1 | A | C |
| Ex. 3 | 3058 | 65 | 0.021 | 61.9 | 7.2 | 0.12 | 115.8 | C | B |
| Ex. 4 | 2551 | 61 | 0.024 | 66.7 | 7.6 | 0.11 | 118.3 | A | C |
| Ex. 5 | 2597 | 63 | 0.024 | 65.5 | 7.5 | 0.11 | 119.2 | A | C |
| Ex. 6 | 2752 | 63 | 0.023 | 65.1 | 7.6 | 0.12 | 120.8 | A | C |
| Ex. 7 | 2821 | 63 | 0.022 | 66.3 | 7.2 | 0.11 | 124.5 | A | C |
| Ex. 8 | 2865 | 64 | 0.022 | 65.2 | 7.1 | 0.11 | 125.5 | A | C |
| Ex. 9 | 2943 | 64 | 0.022 | 65.6 | 7.1 | 0.11 | 126.3 | A | C |
| Ex. 10 | 2177 | 59 | 0.027 | 60.1 | 7.4 | 0.12 | 113.5 | B | C |
| Ex. 11 | 2638 | 63 | 0.024 | 65.1 | 7.5 | 0.12 | 114.7 | B | B |
| Ex. 12 | 2679 | 64 | 0.024 | 63.8 | 7.4 | 0.12 | 115.5 | B | B |
| Ex. 13 | 2846 | 64 | 0.022 | 64.1 | 7.5 | 0.12 | 116.1 | B | B |
| Ex. 14 | 2931 | 64 | 0.022 | 63.5 | 7 | 0.11 | 121.8 | B | B |
| Ex. 15 | 2978 | 65 | 0.022 | 63.2 | 6.8 | 0.11 | 122.3 | B | B |
| Ex. 16 | 3089 | 65 | 0.021 | 62.9 | 6.7 | 0.11 | 123.1 | B | B |
| Ex. 17 | 3897 | 63 | 0.016 | 46.7 | 6.2 | 0.13 | 117.8 | A | B |
| Ex. 18 | 2397 | 60 | 0.025 | 66 | 7.8 | 0.12 | 111.5 | C | B |
| Ex. 19 | 2508 | 62 | 0.025 | 52.9 | 7.1 | 0.13 | 113.7 | C | B |
| Ex. 20 | 2214 | 59 | 0.027 | 67 | 7.8 | 0.12 | 110.3 | C | A |
| Ex. 21 | 2303 | 61 | 0.026 | 52.7 | 7.1 | 0.13 | 112.3 | C | A |

(continued)

| | Evaluation | | | | | | | | |
| --- | --- | --- | --- | --- | --- | --- | --- | --- | --- |
| | Rigidity | Surface hardness | HDD/ FM | Grain transfer characteristics | | | Heat resistance | | Appearance |
| | Flexural Modulus (FM) | D hardness (HDD) | | Mirror surface gloss | Grained Surface gloss (satin grain) | Gloss ratio | HDT 0.45MPa | Bleeding-out resistance | Weld lines |
| | MPa | - | - | % | % | - | °C | - | - |
| Ex. 22 | 3086 | 65 | 0.021 | 58.9 | 6.8 | 0.12 | 132.2 | A | D |
| Ex. 23 | 3581 | 66 | 0.018 | 51.8 | 6.7 | 0.13 | 133.1 | A | C |
| Comp. Ex. 1 | 2142 | 59 | 0.028 | 65.4 | 8.1 | 0.12 | 112.8 | D | A |
| Comp. Ex. 2 | 3815 | 74 | 0.019 | 55.8 | 7.5 | 0.13 | 156.6 | A | E |
| Comp. Ex. 3 | 3678 | 72 | 0.020 | 33.8 | 6.1 | 0.18 | 138.2 | A | D |
| Comp. Ex. 4 | 875 | 53 | 0.061 | 73.6 | 8 | 0.11 | 82.4 | D | A |
| Comp. Ex. 5 | 1362 | 57 | 0.042 | 69.9 | 7.9 | 0.11 | 95.2 | A | B |
| Comp. Ex. 6 | 2250 | 60 | 0.027 | 65.3 | 7.9 | 0.12 | 151.3 | A | E |
| Comp. Ex. 7 | 1970 | 55 | 0.028 | 37.6 | 6.3 | 0.17 | 130.6 | A | D |
| Comp. Ex. 8 | 470 | 50 | 0.106 | 85.5 | 8.2 | 0.10 | 70.7 | D | A |
| Comp. Ex: 9 | 1432 | 58 | 0.041 | 68.7 | 7.8 | 0.11 | 97.5 | A | B |

4. Evaluation

Tables 3 and 4 demonstrate that the molded articles of Examples 1 to 23, which satisfy the requirements of the present invention, have good grain transfer characteristics, a good weld appearance, a soft surface texture, high rigidity, and high heat resistance.

In contrast, the molded articles of Comparative Examples 1 to 9, which do not satisfy the requirements of the present invention, are inferior to those of Examples 1 to 23 in terms of these properties.

For example, the molded article of Comparative Example 1 exhibits noticeable bleeding-out after the thermal test. This phenomenon is probably attributed to the fact that the low-melting-point component (B-B) contained in the propylene-ethylene block copolymer (B-1) migrates toward the surface of the test piece. The molded articles of Comparative Examples 2 and 6 show noticeable weld lines, and the molded articles of Comparative Examples 3 and 7 exhibit poor grain transfer characteristics (gloss ratio). These phenomena are probably attributed to the fact that the propylene homopolymer component of the base resin (E-2 or E-3) greatly affects the progress of cooling and solidification of the resin composition during molding, because these molded articles do not contain the propylene-ethylene random copolymer (A). The molded articles of Comparative Examples 4, 5, 8, and 9, which do not contain the fibrous filler, exhibit insufficiently improved rigidity and heat resistance.

The molded article of the present invention, which is prepared from the fiber-reinforced polypropylene resin composition of the invention, has good grain transfer characteristics, a favorable appearance, a soft surface texture, high rigidity, and high heat resistance. Thus, the molded article is not required to be laminated with another molded article having a soft texture, such as a foam-molded article, resulting in further cost reduction.

The fiber-reinforced polypropylene resin composition of the invention contains economically advantageous components, and can be produced by a simple method at low cost.

The molded article is suitable for various applications; for example, automobile parts including automobile interior/exterior parts, such as instrument panels, glove compartments, console boxes, door trims, armrests, grip knobs, various trims, ceiling parts, housings, pillars, mud guards, bumpers, fenders, rear doors, and fan shrouds, and parts in engine compartments; parts for electric/electronic products, such as television sets and vacuum cleaners; various industrial parts; parts for household facilities, such as toilet seats; and building materials. The molded article, which exhibits both a soft and smooth texture and well-balanced physical properties, is particularly suitable for automobile parts. Therefore, the molded article is very useful in industrial fields.

**Claims**

1. A fiber-reinforced polypropylene resin composition comprising 100 parts by weight of a propylene-ethylene random copolymer (A) and 10 to 200 parts by weight of a fiber (C), the propylene-ethylene random copolymer (A) having properties (A-i) and (A-ii):

   (A-i): a peak melting temperature (Tm) of 110 to 148 °C determined by DSC, and
   (A-ii): a melt flow rate (230°C, 2.16 kg load) of 0.5 to 200 g/10 min;
   and the fiber (C) comprising:
   (C-i): at least one of a glass fiber having a length of 2 to 20 mm and a carbon fiber having a length of 1 to 20 mm,

   wherein the propylene-ethylene random copolymer (A) has an ethylene content of 2 to 3 wt%.

2. The fiber-reinforced polypropylene resin composition according to claim 1, further comprising 10 to 250 parts by weight of a propylene-ethylene block copolymer (B) relative to 100 parts by weight of the propylene-ethylene random copolymer (A), the propylene-ethylene block copolymer (B) **characterized by** items (B-i) to (B-iv):

   (B-i): the copolymer is prepared by sequential polymerization, in the presence of a metallocene catalyst, of 30 to 95 wt% propylene homopolymer or propylene-ethylene random copolymer component (B-A) in a first step, the propylene-ethylene random copolymer component having an ethylene content of 7 wt% or less, and 70 to 5 wt% propylene-ethylene random copolymer component (B-B) having an ethylene content higher by 3 to 20 wt% than that of the component (B-A) in a second step;
   (B-ii): the copolymer has a peak melting temperature (Tm) of 110 to 150°C determined by DSC;
   (B-iii): a single peak at 0°C or lower on a temperature-loss tangent curve (tanδ curve) is obtained by solid viscoelasticity measurement; and
   (B-iv): the copolymer has a melt flow rate (230°C, 2.16 kg load) of 0.5 to 200 g/10 min.

3. The fiber-reinforced polypropylene resin composition according to claim 1 or 2, further comprising 5 to 200 parts by weight of a thermoplastic elastomer (D) relative to 100 parts by weight of the propylene-ethylene random copolymer (A), the thermoplastic elastomer (D) having properties (D-i) and (D-ii):

(D-i): a density of 0.86 to 0.92 $g/cm^3$, and
(D-ii): a melt flow rate (230°C, 2.16 kg load) of 0.5 to 100 g/10 min.

4. The fiber-reinforced polypropylene resin composition according to any one of claims 1 to 3, further comprising 5 to 50 parts by weight of a propylene polymer resin (E) relative to 100 parts by weight of the propylene-ethylene random copolymer (A), the propylene polymer resin (E) **characterized by** items (E-i) to (E-iii):

(E-i): the propylene polymer resin (E) is a propylene homopolymer;
(E-ii): the resin has a melt flow rate (230°C, 2.16 kg load) of 0.5 to 300 g/10 min; and
(E-iii): the resin has a peak melting temperature (Tm) of 155 to 168°C determined by DSC.

5. The fiber-reinforced polypropylene resin composition according to any one of claims 1 to 4, wherein the fiber (C) is glass fiber having a length of 2 to 20 mm.

6. A molded article prepared from a fiber-reinforced polypropylene resin composition according to any one of claims 1 to 5.

7. The molded article according to claim 6, which has a grained surface.

**Patentansprüche**

1. Faserverstärkte Polypropylenharzzusammensetzung, umfassend 100 Gewichtsteile eines statistischen Propylen-Ethylen-Copolymers (A) und 10 bis 200 Gewichtsteile einer Faser (C), wobei das statistische Propylen-Ethylen-Copolymer (A) die Eigenschaften (A-i) und (A-ii) aufweist:

(A-i): eine Spitzenschmelztemperatur (Tm) von 110 bis 148°C, bestimmt durch DSC, und
(A-ii): eine Schmelzflussrate (230°C, 2,16 kg Last) von 0,5 bis 200 g/10 min; und wobei die Faser (C) umfasst:
(C-i): mindestens eine von einer Glasfaser mit einer Länge von 2 bis 20 mm und einer Kohlenstofffaser mit einer Länge von 1 bis 20 mm,

wobei das statistische Propylen-Ethylen-Copolymer (A) einen Ethylengehalt von 2 bis 3 Gew.-% aufweist.

2. Faserverstärkte Polypropylenharzzusammensetzung nach Anspruch 1, weiter umfassend 10 bis 250 Gewichtsteile eines Propylen-Ethylen-Blockcopolymers (B), bezogen auf 100 Gewichtsteile des statistischen Propylen-Ethylen-Copolymers (A), wobei das Propylen-Ethylen-Blockcopolymer (B) durch die Punkte (B-i) bis (B-iv) gekennzeichnet ist:

(B-i): das Copolymer wird durch aufeinanderfolgende Polymerisation, in der Gegenwart eines Metallocenkatalysators, von 30 bis 95 Gew.-% eines Propylen-Homopolymers oder eines statistischen Propylen-Ethylen-Copolymerbestandteils (B-A) in einem ersten Schritt, wobei der statistische Propylen-Ethylen-Copolymerbestandteil einen Ethylengehalt von 7 Gew.-% oder weniger aufweist, und 70 bis 5 Gew.-% eines statistischen Propylen-Ethylen-Copolymerbestandteils (B-B) mit einem Ethylengehalt, der um 3 bis 20 Gew.-% höher als der des Bestandteils (B-A) ist, in einem zweiten Schritt hergestellt;
(B-ii): das Copolymer hat eine Spitzenschmelztemperatur (Tm) von 110 bis 150°C, bestimmt durch DSC;
(B-iii): eine einzelne Spitze bei 0°C oder weniger auf einer Temperaturverlusttangentenkurve (tan$\delta$-Kurve) wird durch Feststoff-Viskoelastizitätsmessung erhalten; und
(B-iv): das Copolymer hat eine Schmelzflussrate (230°C, 2,16 kg Last) von 0,5 bis 200 g/10 min.

3. Faserverstärkte Polypropylenharzzusammensetzung nach Anspruch 1 oder 2, weiter umfassend 5 bis 200 Gewichtsteile eines thermoplastischen Elastomers (D), bezogen auf 100 Gewichtsteile des statistischen Propylen-Ethylen-Copolymers (A), wobei das thermoplastische Elastomer (D) die Eigenschaften (D-i) und (D-ii) aufweist:

(D-i): eine Dichte von 0,86 bis 0,92 $g/cm^3$, und
(D-ii) eine Schmelzflussrate (230°C, 2,16 kg Last) von 0,5 bis 100 g/10 min.

**4.** Faserverstärkte Polypropylenharzzusammensetzung nach einem der Ansprüche 1 bis 3, weiter umfassend 5 bis 50 Gewichtsteile eines Propylenpolymerharzes (E), bezogen auf 100 Gewichtsteile des statistischen Propylen-Ethylen-Copolymers (A), wobei das Propylenpolymerharz (E) durch die Punkte (E-i) bis (E-iii) gekennzeichnet ist:

(E-i): das Propylenpolymerharz (E) ist ein Propylen-Homopolymer;
(E-ii): das Harz hat eine Schmelzflussrate (230°C, 2,16 kg Last) von 0,5 bis 300 g/10 min; und
(E-iii): das Harz hat eine Spitzenschmelztemperatur (Tm) von 155 bis 168°C, bestimmt durch DSC.

**5.** Faserverstärkte Polypropylenharzzusammensetzung nach einem der Ansprüche 1 bis 4, wobei die Faser (C) eine Glasfaser mit einer Länge von 2 bis 20 mm ist.

**6.** Formgegenstand, hergestellt aus einer faserverstärkten Polypropylenharzzusammensetzung nach einem der Ansprüche 1 bis 5.

**7.** Formgegenstand nach Anspruch 6, der eine gemaserte Oberfläche aufweist.


**Revendications**

**1.** Composition de résine de polypropylène renforcée par fibres comprenant 100 parties en poids d'un copolymère statistique de propylène-éthylène (A) et 10 à 200 parties en poids d'une fibre (C), le copolymère statistique de propylène-éthylène (A) présentant les propriétés (A-i) et (A-ii) :

(A-i) : une température de fusion maximale (Tm) allant de 110 à 148°C déterminée par DSC, et
(A-ii) : une fluidité (230°C, charge de 2,16 kg) allant de 0,5 à 200 g/10 min ;

et la fibre (C) comprenant :

(C-i) : au moins l'une parmi une fibre de verre ayant une longueur allant de 2 à 20 mm et une fibre de carbone ayant une longueur allant de 1 à 20 mm,
où le copolymère statistique de propylène-éthylène (A) a une teneur en éthylène allant de 2 à 3% en poids.

**2.** Composition de résine de polypropylène renforcée par fibres selon la revendication 1, comprenant en outre, 10 à 250 parties en poids d'un copolymère séquencé de propylène-éthylène (B) par rapport à 100 parties en poids du copolymère statistique de propylène-éthylène (A), le copolymère séquencé de propylène-éthylène (B) étant **caractérisé par** les propriétés (B-i) à (B-iv) :

(B-i) : le copolymère est préparé par polymérisation séquentielle, en présence d'un catalyseur métallocène, de 30 à 95% en poids d'un homopolymère de propylène ou d'un composant copolymère de propylène-éthylène (B-A) au cours d'une première étape, le composant copolymère de propylène-éthylène (B-A) présentant une teneur en éthylène de 7% en poids ou moins, et 70 à 5% en poids d'un composant copolymère de propylène-éthylène (B-B) ayant une teneur en éthylène supérieure de 3 à 20% à celle du composant (B-A) au cours d'une deuxième étape ;
(B-ii) : le copolymère présente une température de fusion maximale (Tm) allant de 110 à 150°C déterminée par DSC ;
(B-iii) : un pic unique à 0°C ou moins sur une courbe température-tangente de perte (courbe tanô) est obtenue par mesure de la viscoélasticité solide, et
(B-iv) : le copolymère présente une fluidité (230°C, charge de 2,16 kg) allant de 0,5 à 200 g/10 min.

**3.** Composition de résine de polypropylène renforcée par fibres selon la revendication 1 ou 2, comprenant en outre, 5 à 200 parties en poids d'un élastomère thermoplastique (D) par rapport à 100 parties en poids du copolymère statistique de propylène-éthylène (A), l'élastomère thermoplastique (D) ayant les propriétés (D-i) et (D-ii) :

(D-i) : une masse spécifique allant de 0,86 à 0,92 g/cm3, et
(D-ii) : une fluidité (230°C, charge de 2,16 kg) allant de 0,5 à 100 g/10 minute.

**4.** Composition de résine de polypropylène renforcée par fibres selon l'une quelconque des revendications 1 à 3, comprenant en outre, 5 à 50 parties en poids d'une résine de polymère de propylène (E) par rapport à 100 parties en poids du copolymère statistique de propylène-éthylène (A), la résine de polymère de propylène (E) étant **caractérisée** les propriétés (E-i) à (E-iii) :

(E-i) : la résine de polymère de propylène (E) est un homopolymère de propylène ;
(E-ii) : la résine a une fluidité (230°C, charge de 2,16 kg) allant de 0,5 à 300 g/10 minute, et
(E-iii) la résine a une température de fusion maximale (Tm) allant de 155 à 168°C déterminée par DSC.

5. Composition de résine de polypropylène renforcée par fibres selon l'une quelconque des revendications 1 à 4, où la fibre (C) est une fibre de verre ayant une longueur allant de 2 à 20 mm.

6. Article moulé préparé à partir d'une composition de résine de polypropylène renforcée par fibres selon l'une. quelconque des revendications 1 à 5.

7. Article moulé selon la revendication 6, qui présente une surface grenée.

[Fig. 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002003691 A
- JP 2011079924 A
- JP 2011132294 A
- JP 2009155522 A
- JP 2002206034 A
- JP H07292212 A
- JP 2009506177 A
- WO 2007025663 A
- JP 2012087263 A
- JP 2002284808 A
- JP 2002053609 A
- JP 2002069116 A
- JP 2003105015 A
- JP S4734478 B
- JP S5823806 B
- JP S63146906 B
- JP S56100806 A
- JP S56120712 A
- JP S58104907 A
- JP S5763310 A
- JP S58157808 A
- JP S5883006 A
- JP S585310 A
- JP S61218606 A
- JP S6343915 A
- JP S6383116 A
- JP S6354296 B
- JP H0725960 A
- JP 2003002939 A
- WO 9104257 A
- JP H05295022 A

**Non-patent literature cited in the description**

- **G. GLOCKNER.** *J. Appl. Polym. Sci.: Appl. Polym. Symp.,* 1990, vol. 45, 1-24
- **L. WILD.** *Adv. Polym. Sci.,* 1990, vol. 98, 1-47
- **J. B. P. SOARES ; A. E. HAMIELEC.** *Polymer,* 1995, vol. 36 (8), 1639-1654
- *Macromolecules,* 1988, vol. 21, 314-319
- *Macromolecules,* 1984, vol. 17, 1950
- **CARMAN.** *Macromolecules,* 1977, vol. 10, 536
- *Macromolecules,* 1982, vol. 15, 1150